(19) Europäisches Patentamt
European Patent Office
Office européen des brevets

(11) **EP 4 760 639 A1**

(12) **EUROPEAN PATENT APPLICATION**
published in accordance with Art. 153(4) EPC

(43) Date of publication:
**17.06.2026 Bulletin 2026/25**

(21) Application number: **24851007.5**

(22) Date of filing: **06.08.2024**

(51) International Patent Classification (IPC):
**G06T 15/00** (2011.01)

(52) Cooperative Patent Classification (CPC):
Y02D 10/00

(86) International application number:
**PCT/CN2024/110128**

(87) International publication number:
**WO 2025/031362 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 CN 202310993195**

(71) Applicant: **Moore Threads Technology Co., Ltd. Beijing 100036 (CN)**

(72) Inventors:
• **SUN, Tong**
  **Beijing 100036 (CN)**
• **YANG, Lei**
  **Beijing 100036 (CN)**

(74) Representative: **Lavoix**
  **Bayerstraße 83**
  **80335 München (DE)**

(54) **TILE DISTRIBUTION CONTROL METHOD, CHIP AND APPARATUS, TILE DISTRIBUTION CONTROLLER, ELECTRONIC DEVICE, STORAGE MEDIUM, AND COMPUTER PROGRAM PRODUCT**

(57) The embodiments of the present disclosure relate to the technical field of computers. Disclosed are a tile distribution control method, chip and apparatus, a tile distribution controller, an electronic device, a storage medium, and a computer program product, which at least solve the problems of an initialization time being long, hardware resource consumption being high, a GPU utilization rate being low, etc. The specific implementation solution includes: on the basis of at least one identification bit in layer-effective identification information, determining at least one target layer to be rendered from among at least one layer to be rendered, wherein each identification bit indicates whether a corresponding layer to be rendered is effective; and for each target layer to be rendered, on the basis of tile indication information of at least one rendering core, determining a target rendering core corresponding to at least one target tile in the target layer to be rendered, such that each target rendering core renders a corresponding target tile in parallel, wherein each piece of tile indication information is used for indicating the number of tiles to be rendered that a corresponding rendering core may receive.

At least one target layer to-be-rendered is determined from at least one layer to-be-rendered based on at least one identification bit in layer valid identification information — S11

For each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered that are receivable by the corresponding rendering core — S12

**FIG. 1D**

EP 4 760 639 A1

**Description**

CROSS-REFERENCE TO RELATED APPLICATION

Embodiments of this application are based on and claim priority to Chinese Patent Application No. 202310993195.3, filed on August 08, 2023 and entitled "Picture block distribution control method, chip, device, controller, equipment and medium", the contents of which are hereby incorporated by reference in by its entirety.

TECHNICAL FIELD

The present disclosure relates to, but is not limited to, the field of computer technology, and particularly relates to a tile distribution control method, chip and apparatus, a tile distribution controller, an electronic device, a storage medium, and a computer program product.

BACKGROUND

In the DirectX (DX) standard, a Render Target (RT) is allowed to bind resources (such as scenes, textures, etc.) of a two-dimensional array (2DArray) to achieve multi-layer rendering, that is, multiple rendering scenes or multiple texture resources are rendered to different layers respectively.

In the related art, in the architecture of Tile-based Rendering (TBR), rendering is usually performed layer by layer. On the one hand, since each layer requires designated hardware (for example, Fireware) to perform register initialization and other operations, which not only prolongs the initialization time, but also increases the resource consumption of hardware. On the other hand, because the rendering of a subsequent layer must wait for the completion of the rendering of the previous layer, there is discontinuity between consecutive layers in the hardware, leading to significant idle time (also called Pipeline stalls) for the GPU (Graphics Processing Unit), which reduces GPU utilization.

SUMMARY

Embodiments of the present disclosure provide a tile distribution control method, chip and apparatus, a controller, an electronic device, a storage medium, and a computer program product.

An embodiment of the present disclosure provides a method for controlling tile distribution, including that:

at least one target layer to-be-rendered is determined from at least one layer to-be-rendered based on at least one identification bit in layer valid identification information; and

for each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered which are receivable by the corresponding rendering core.

An embodiment of the present disclosure provides a tile distribution controller. The controller includes a processing part and a generating part.

The processing part is configured to determine at least one target layer to-be-rendered from at least one layer to-be-rendered based on at least one identification bit in the layer valid identification information.

The generating part is configured to: for each target layer to-be-rendered, determine a target rendering core corresponding to at least one target tile in the target layer to-be-rendered based on tile indication information for at least one rendering core, to enable that each target rendering core renders the corresponding target tile in parallel; herein, each piece of the tile indication information is used to indicate the number of tiles to-be-rendered that are receivable by the corresponding rendering core.

An embodiment of the present disclosure provides a tile distribution control chip, which is applied to a graphics processor, herein, the graphics processor performs a tile distribution process through a TBR architecture, herein:

the frontend module of the TBR architecture is configured to: determine layer valid identification information based on an image to-be-rendered; wherein the image to-be-rendered comprises at least one layer to-be-rendered, and the layer valid identification information comprises at least one identification bit;

a controller configured to: acquire the layer valid identification information determined by the frontend module; determine at least one target layer to-be-rendered from the at least one layer to-be-rendered based on the at least one identification bit in the layer valid identification information; for each target layer to-be-rendered, determine a target rendering core corresponding to at least one target tile in the target layer to-be-rendered based on tile indication information for at least one rendering core; herein, each piece of the tile indication information is used to indicate the number of tiles to-be-rendered that are receivable by a corresponding rendering core; and

the backend module of the TBR architecture is configured to: use each target rendering core to render a corresponding target tile in parallel, to complete rendering of the image to-be-rendered.

An embodiment of the present disclosure provides an apparatus for controlling tile distribution, the apparatus includes a first determination module and a second determination module.

The first determination module is: determine at least one target layer to-be-rendered from at least one layer to-be-rendered based on at least one identification bit in layer valid identification information.

The second determination module is configured to: for each target layer to-be-rendered, determine a target rendering core corresponding to at least one target tile in the target layer to-be-rendered based on tile indication information for at least one rendering core, to enable that each target rendering core renders a corresponding target tile in parallel; herein, each piece of the tile indication information is used to indicate the number of tiles to-be-rendered that are receivable by a corresponding rendering core.

Embodiments of the present disclosure provide an electronic device including a processor and a memory; herein, the memory stores a computer program executable on the processor; and when executing the computer program, the processor implements the above method.

Embodiments of the present disclosure provide a computer-readable storage medium having stored thereon a computer program that when executed by a processor, implements the above method.

Embodiments of the present disclosure provide a computer program product, including a non-transitory computer-readable storage medium, herein, the non-transitory computer-readable storage medium stores a computer program that, when read and executed by a computer, implements the above method.

In an embodiment of the present disclosure, at least one target layer to-be-rendered is determined from at least one layer to-be-rendered based on at least one identification bit in the layer valid identification information; for each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered which are receivable by the corresponding rendering core. In this way, by using the layer valid identification information to determine multiple valid target layers to-be-rendered, the merging of multiple layers to-be-rendered is achieved. On the one hand, compared with performing one initialization operation for each layer, the initialization of the multiple layers to-be-rendered is performed through a single initialization operation, which not only shortens the initialization duration, but also reduces the resource consumption of hardware. On the other hand, compared with the rendering of the subsequent layer having to wait for completion of the rendering of the previous layer, processing for the multiple target layers to-be-rendered can be performed simultaneously, so that the continuity between the multiple target layers to-be-rendered in hardware can be ensured, thereby reducing the idle time of the GPU, and thus further improving the utilization rate of the GPU and reducing the possibility of hardware performance degradation caused by pipeline stalls. At the same time, the target rendering core for the target tile is determined based on the tile indication information for each rendering core, which reduces the possibility of wasting hardware resources due to the idle states caused by underutilization of some rendering cores, thereby balancing the load across individual rendering cores, improving the rendering efficiency, and further improving the overall rendering performance of the graphics processor.

It should be understood that the above general description and the following detailed description are exemplary and explanatory only, and do not limit the present disclosure.

BRIEF DESCRIPTION OF THE DRAWINGS

In order to more clearly illustrate the technical solution of the embodiment of the present disclosure, the accompanying drawings required for the embodiment of the present disclosure will be described below.

The accompanying drawings herein, which are incorporated into and constitute a part of the specification, illustrate embodiments consistent with the present disclosure, and together with the specification, are used to explain technical solutions of the present disclosure.

FIG. 1A is a first schematic diagram of multi-layer rendering in a related art according to an embodiment of the present disclosure.

FIG. 1B is a schematic diagram of a typical TBR pipeline procedure according to an embodiment of the present disclosure.

FIG. 1C is a second schematic diagram of multi-layer rendering in a related art according to an embodiment of the present disclosure.

FIG. 1D is a first schematic flowchart of an implementation of a method for controlling tile distribution according to an embodiment of the present disclosure.

FIG. 1E is a schematic diagram of layer valid identification information according to an embodiment of the present disclosure.

FIG. 1F is a schematic diagram of a partitioning result of target layers to-be-rendered according to an embodiment of the present disclosure.

FIG. 1G is a schematic diagram of target layers to-be-rendered and rendering cores according to an embodiment of the present disclosure.

FIG. 1H is a schematic diagram of storage positions of multiple layers to-be-rendered in a memory of a GPU according to an embodiment of the present disclosure.

FIG. 2A is a second schematic flowchart of an implementation of a method for controlling tile distribution according to an embodiment of the present disclosure.

FIG. 2B is a schematic diagram of a resource table according to an embodiment of the present disclosure.

FIG. 3 is a third schematic flowchart of an implementation of a method for controlling tile distribution according to an embodiment of the present disclosure.

FIG. 4A is a first schematic diagram of a composition structure of a tile distribution controller according to an embodiment of the present disclosure.

FIG. 4B is a schematic diagram of a target tile distribution according to an embodiment of the present disclosure.

FIG. 4C is a second schematic diagram of a composition structure of a tile distribution controller according to an embodiment of the present disclosure.

FIG. 5A is a schematic diagram of a composition structure of a control chip for tile distribution according to an embodiment of the present disclosure.

FIG. 5B is a schematic diagram of processing multi-layer rendering through a backend module according to an embodiment of the present disclosure.

FIG. 5C is a schematic diagram of a multi-layer rendering according to an embodiment of the present disclosure.

FIG. 6 is a schematic diagram of a composition structure of an apparatus for controlling tile distribution according to an embodiment of the present disclosure.

FIG. 7 is a schematic diagram of a hardware entity of an electronic device according to an embodiment of the present disclosure.

DETAILED DESCRIPTION

In order to make the objects, technical solutions, and advantages of the present disclosure more clear, the present disclosure will be further described in detail below with reference to the accompanying drawings, and the described embodiments should not be regarded as limiting the present disclosure, and all other embodiments obtained by those skilled in the art without creative work fall within the scope of protection of the present disclosure.

In the following description, references to "some embodiments" describe subsets of all possible embodiments, but it may be understood that "some embodiments" may be the same subset or different subsets of all possible embodiments, and may be combined with each other without conflict.

In the following description, the terms "first\ second\ third" are merely used to distinguish similar objects and does not represent a specific order for objects, and it can be understood that "first\ second\ third" may be interchanged for a specific sequence or sequential order where permitted, to enable the embodiments of the present disclosure described herein to be implemented in an order other than that illustrated or described herein.

Unless otherwise defined, all technical and scientific terms used herein have the same meaning as commonly understood by those skilled in the art to which the present disclosure belongs. The terms used herein are for the purpose of describing embodiments of the disclosure only, and are not intended to limit the disclosure.

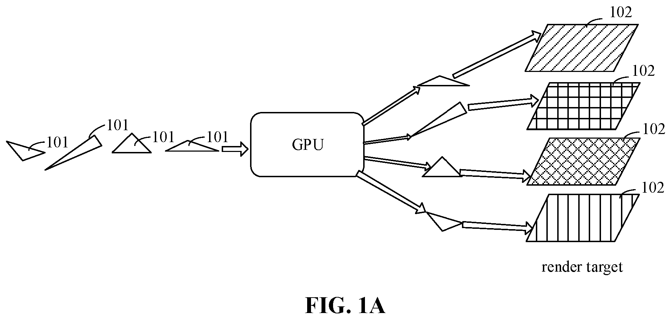

In DX, RT is allowed to bind multiple scenes or multiple textures of 2DArray, an index value (RenderTargetArrayIndex, rta_idx) for each primitive in the multiple scenes or multiple textures is output through a Geometry Shader (GS), and each primitive is rendered to different layers (layers) according to the rta_idx carried by each primitive through an Output Merger Stage (Output Merger Stage) to realize multi-layer rendering. FIG. 1A is a first schematic diagram of multi-layer rendering in a related art according to an embodiment of the present disclosure. As illustrated in FIG. 1A, the GPU receives multiple primitives 101 processed by the GS, and simultaneously parses each primitive 101 to obtain rta_idx for the primitive 101; and the GPU renders the primitive 101 to different layers 102 of the render target based on the rta_idx of the primitive 101.

TBR is a process of subdividing a computer graphics image into regular grids in an optical space and rendering parts of grids or tiles respectively. The advantages of such design lie in reduced memory and bandwidth consumption compared to Immediate Mode Rendering (IMR) system that render an entire frame immediately, enabling the TBR widely used in low-power hardware devices.

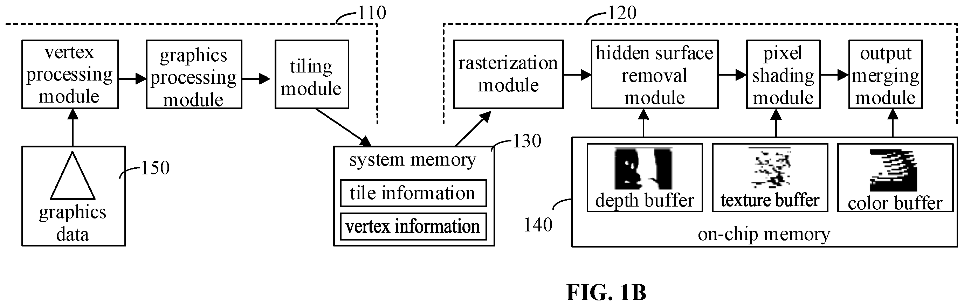

FIG. 1B is a schematic diagram of a typical TBR pipeline procedure according to an embodiment of the present disclosure. As illustrated in FIG. 1B, the TBR pipeline procedure is divided into a frontend module 110 (also referred to as a geometric stage) and a backend module 120 (also referred to as a 3D stage).

The frontend module 110 includes a vertex processing module, a graphics processing module, and a tiling module. The vertex processing module is configured to perform vertex and primitive transformation (vertex processing) on the graphics data 150. The graphics processing module is configured to perform culling, clipping, and other processing on primitives. The tiling module is configured to perform screen division, record graphic data covering tiles, and write generated information such as tile information (Primitive List) and vertex information (Vertex Data) into the system memory 130. Herein, the primitive list is an array with a fixed-length equal to the tile, and each element in the array is a linked list stored with pointers of all triangles intersecting with a current tile. The pointers point to vertex data. The vertex data stores vertexes and vertex attribute data.

The backend module 120 includes a rasterization module, a Hidden Surface Removal (HSR) module, a pixel shading module, and an output merging module. Herein, the rasterization module is configured to convert the primitives into a two-dimensional image. Each point in the two-dimensional image contains color, depth and texture data. This point and related information are referred to as a fragment. The HSR module is configured to remove the occluded triangles. The pixel texture data shading module is configured to perform shading on pixels. The output merging module is configured to merge multiple tiles and output them to RT.

For each tile, due to its small amount of data, the required depth data, texture data, and color data (color) for the tile may be loaded into the on-chip Static Random-Access Memory (SRAM) of the GPU, that is, the on-chip memory 140. For example, the hidden surface removal module may store depth data into a depth data buffer (depth buffer) in the on-chip memory 140, the pixel shading module may store texture data into a texture data buffer in the on-chip memory 140, and the output merging module may store color data into a color data buffer (color buffer) in the on-chip memory 140.

In the rendering process, the render object (image) is partitioned into multiple tiles, so that all the data of each tile can be accommodated by the on-chip memory 140. After at least one drawing command arrives at the GPU, the frontend module 110 sequentially processes each drawing command, and stores the corresponding tile information and vertex information in the system memory 130 until the data stored in the system memory 130 reaches a preset threshold or the processing of all of at least one drawing command is completed. The backend module 120 reads the corresponding vertex information from the system memory 130 in units of tiles, and performs subsequent processing. In this way, since the access of the backend module 120 to the system memory 130 is changed to the access of the backend module 120 to the on-chip memory 140, the rendering efficiency can be improved.

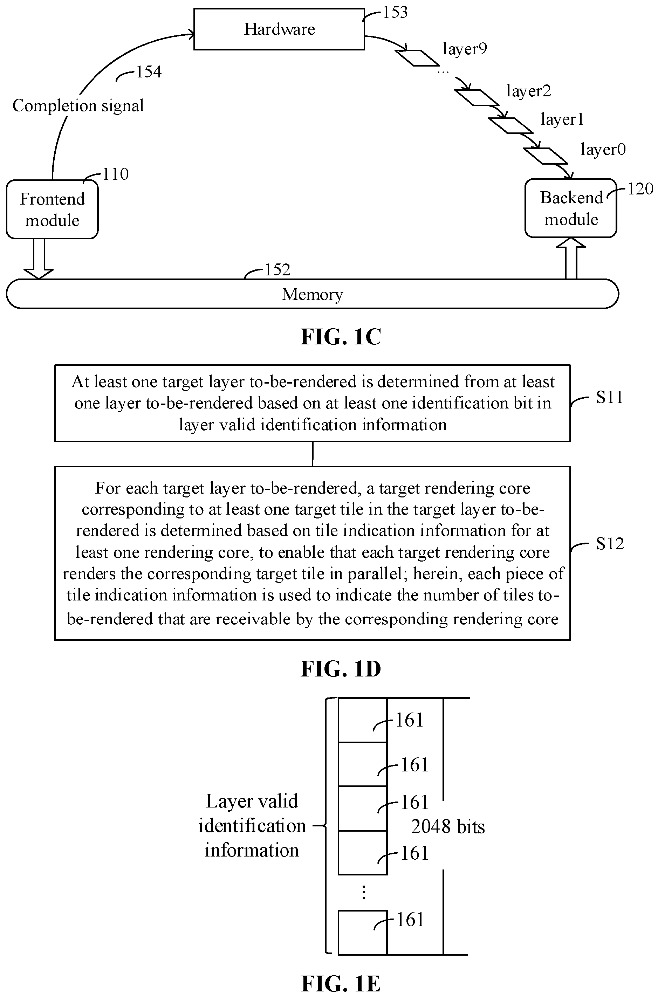

In the related art, in the TBR architecture, the frontend module usually outputs the data of each layer to the system memory, and then the designated hardware Fireware initiates the backend module to render the data of each layer respectively. FIG. 1C is a second schematic diagram of multi-layer rendering in a related art according to an embodiment of the present disclosure, as illustrated in FIG. 1C, herein:

the primitive data of each layer is outputted to the memory 152 of the GPU through the frontend module 110;
after receiving the signal 154 indicating that all layers have been processed, the designated hardware 153 first kicks the first layer (layer0) down to the backend module 120 for rendering; and after the first layer is rendered, the second layer (layer1) is kicked down to the backend module 120 for rendering until the tenth layer (layer9) is kicked down to the backend module 120 for rendering; and
the backend module 120 receives the rendering command, obtains the data of a layer from the memory 152 of the GPU, and writes the data of the layer to the corresponding position on the RT to complete the rendering of this layer.

Thus, first of all, since rendering is performed layer by layer, and each layer requires hardware to perform preparatory work such as register initialization, which not only prolongs the initialization time, but also increases the resource consumption of hardware; secondly, because the rendering of the subsequent layer must wait for the completion of rendering of the previous layer, there is discontinuity between consecutive layers in the hardware, leading to significant idle time for the GPU, which reduces GPU utilization; finally, in a GPU including multiple rendering cores, if the number of tiles in each layer is small, the tiles in each layer will only be processed by the same rendering core, while other rendering cores remain idle, resulting in a waste of hardware resources.

An embodiment of the present disclosure provides a method for controlling tile distribution, by using the layer valid identification information to determine multiple valid target layers to-be-rendered, the merging of multiple layers to-be-rendered is achieved. On the one hand, compared with performing one initialization operation for each layer, the initialization of the multiple layers to-be-rendered is performed through a single initialization operation, which not only shortens the initialization duration, but also reduces the resource consumption of hardware. On the other hand, compared with the rendering of the subsequent layer having to wait for completion of the rendering of the previous layer, processing for the multiple target layers to-be-rendered can be performed simultaneously, so that the continuity between the multiple target layers to-be-rendered in hardware can be ensured, thereby reducing the idle time of the GPU, and thus further improving the utilization rate of the GPU and reducing the possibility of hardware performance degradation caused by pipeline stalls. At the same time, the target rendering core for the target tile is determined based on the tile indication information for each rendering core, which reduces the possibility of wasting hardware resources due to the idle states caused by underutilization of some rendering cores, thereby balancing the load across individual rendering cores, improving the rendering efficiency, and further improving the overall rendering performance of the graphics processor. The method according to the embodiment of the present disclosure may be performed by an electronic device, which may be various types of terminals such as a notebook computer, a tablet computer, a desktop computer, a set-top box, a mobile device (for example, a mobile phone, a portable music player, a personal digital assistant, a dedicated messaging device, a portable gaming device), and the like, or may be implemented as a server. The server may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, Content Delivery Network (CDN), and big data and artificial intelligence platforms.

Hereinafter, the technical solutions in the embodiments of the present disclosure will be clearly and completely described with reference to the drawings in the embodiments of the present disclosure.

FIG. 1D is a first schematic flowchart of an implementation of a method for controlling tile distribution according to an embodiment of the present disclosure. As illustrated in FIG. 1D, the method includes operations S11 to S12.

In operation S11, at least one target layer to-be-rendered is determined from at least one layer to-be-rendered based on at least one identification bit in layer valid identification information.

Here, the GPU includes a preset number of rendering cores. For example, the preset number may be 4, 8, or the like.

The controller may be any suitable module capable of implementing control functions. The controller communicates with the frontend module and the backend module of TBR architecture respectively to realize the parallel processing of multiple layers. In some embodiments, the frontend module determines the layer valid identification information and stores the layer valid identification information in the memory of the GPU, and then the controller may obtain the layer valid identification information from the memory of the GPU. In implementation, the frontend module may refer to the specific implementation of the frontend module 110 in FIG. 1B, and the backend module may refer to the specific implementation of the backend module 120 in FIG. 1B.

The number of identification bits is at least one. For example, the number of identification bits may be 1024 bits, 2048 bits, or the like. Each identification bit represents a layer to-be-rendered, and whether the corresponding layer to-be-rendered is valid is determined based on the value of the identification bit. Whether the layer to-be-rendered is valid indicates whether there is valid primitive information on the layer to-be-rendered. For example, the frontend module specifies through GS that there are 20 triangles on the first layer, no triangles on the second layer, and 10 triangles on the third layer, then there is valid primitive information on the first layer, no valid primitive information on the second layer, and valid primitive information on the third layer.

FIG. 1E is a schematic diagram of layer valid identification information according to an embodiment of the present disclosure. As illustrated in FIG. 1E, the layer valid identification information includes 2048 identification bits 161, and each identification bit 161 represents whether the corresponding layer to-be-rendered is valid. For example, if the second identification bit (bit1) is 1, it indicates that there is valid primitive information on the second layer to-be-rendered (layer1).

In some implementations, an identification bit for a certain layer to-be-rendered may be compared with a first preset condition to determine whether the certain layer to-be-rendered is valid. The first preset condition may be any suitable condition. For example, the first preset condition may be any suitable preset value. For example, the first preset condition may be a preset value of 1. In implementation, when the identification bit of a certain layer to-be-rendered satisfies the first preset condition, it indicates that this layer to-be-rendered is valid; on the contrary, when the identification bit of the certain layer to-be-rendered does not satisfy the first preset condition, it indicates that this layer to-be-rendered is invalid. For example, the preset condition is a preset value of 1, when the identification bit of the layer A to-be-rendered is 1, it indicates that the layer A to-be-rendered is a valid layer; on the contrary, when the identification bit of the layer A to-be-rendered is not 1, for example, the identification bit of the layer A to-be-rendered is 0, it indicates that the layer A to-be-rendered is an invalid layer.

The number of target layers to-be-rendered is at least one. In some implementations, based on the number of valid layers to-be-rendered, at least one target layer to-be-rendered may be determined from all layers to-be-rendered. In implementation, if the number of valid layers to-be-rendered is small, each valid layer to-be-rendered may be taken as a target layer to-be-rendered. If the number of valid layers to-be-rendered is large, some layers to-be-rendered may be selected from all the valid layers to-be-rendered by using a preset selection manner, each taken as a target layer to-be-rendered. Among them, the selection manner may include, but is not limited to, random selection, sequential selection, custom selection, default selection, etc.

For example, if six valid layers to-be-rendered are obtained by parsing the layer valid identification information, each of the six valid layers to-be-rendered may be taken as a target layer to-be-rendered; on the contrary, if there are 30 valid layers to-be-rendered, then based on the layer identification, each of the first few valid layers to-be-rendered is taken as a target layer to-be-rendered.

In some implementations, valid layers to-be-rendered may be determined from multiple layers to-be-rendered by using a first preset condition; and at least one target layer to-be-rendered may be determined from all of the valid layers to-be-rendered based on at least one resource table entry in the preset resource table. Herein, the resource table is used to record information of layers currently being rendered by the pipeline. The number of resource table entries may be any suitable number. For example, the number of resource table entries may be 16, 32, or 48, etc. In implementation, a resource table entry is requested for each valid layer to-be-rendered, and if the request is successful, the valid layer to-be-rendered may be taken as a target layer to-be-rendered; If the request is unsuccessful, the request continues.

For example, if there are many valid layers to-be-rendered (for example, 2048), the backend module cannot simultaneously draw many valid layers to-be-rendered, then each valid layer to-be-rendered needs to request a resource table entry from the resource table before it can be rendered. If all resource table entries are occupied, no new valid layers to-be-rendered are allowed to be performed until an occupied resource table entry in the resource table is released.

In implementation, the resource table may be stored in the controller or located in other modules, e.g., a frontend module, a backend module, etc.

In operation S12: for each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered which are receivable by the corresponding rendering core.

Here, the tile indication information is used to indicate the number of tiles to-be-rendered that may be received by the corresponding rendering core. For example, for the rendering core Core1, if the number of tiles to-be-rendered in the rendering core Core1 is 2, and the rendering core Core1 may process at most 4 tiles, the tile indication information for the rendering core Core1 is 2.

In some implementations, the rendering core may process any suitable preset number of tiles. For example, the preset number here may be 4, 6, 8, or the like. In implementation, different rendering cores may process the same or different number of tiles. For example, for the rendering cores Core0 to Core2, each of these three rendering cores may process 4 tiles, or the rendering core Core0 and the rendering core Core1 may process 8 tiles, and the rendering core Core2 may process 4 tiles.

The number of target tiles is at least one. In implementation, a target layer to-be-rendered may be partitioned into multiple target tiles by using a preset partitioning strategy. Herein, the partitioning strategy may include, but is not limited to, a partitioning manner, a partitioning length, a partitioning quantity, and the like. The partitioning manner may include, but is not limited to, uniform partitioning, random partitioning, non-uniform partitioning, and the like. For example, the target layer to-be-rendered is evenly partitioned into 8 target tiles. For another example, the target layer to-be-rendered is partitioned according to any suitable preset size (such as 16 * 16), to obtain multiple target tiles.

In some implementations, each rendering core partitions the target layer to-be-rendered by using this partitioning strategy, and the resulting multiple tiles are distributed to each rendering core in a round-robin manner.

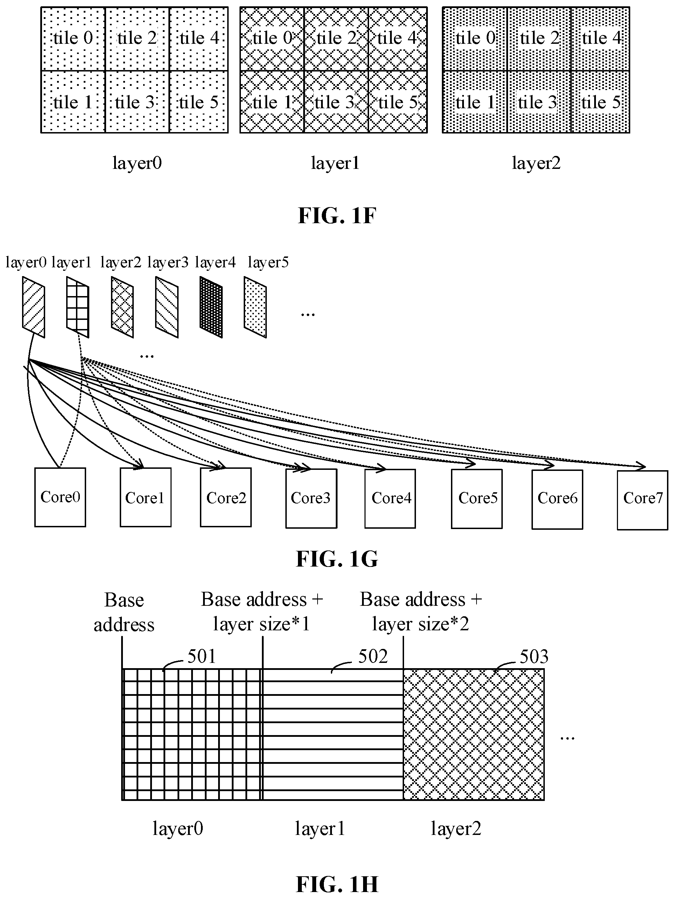

FIG. 1F is a schematic diagram of a partitioning result of target layers to-be-rendered according to an embodiment of the present disclosure. As illustrated in FIG. 1F, there are three target layers to-be-rendered (layer0 to layer2), and each target layer to-be-rendered is uniformly partitioned into six target tiles. Therefore, the target layer to-be-rendered (layer0) includes tile 0 to tile 5, the target layer to-be-rendered (layer1) includes tile 0 to tile 5, and the target layer to-be-rendered (layer2) includes tile 0 to tile 5.

In some implementations, the number of target tiles included in each target layer to-be-rendered is the same by using the same partitioning strategy because each target layer to-be-rendered has the same size.

In some implementations, the sorting of each rendering core may be performed based on tile indication information for each rendering core to obtain order information of each rendering core, and a target rendering core corresponding to a target tile may be determined based on the order information of each rendering core. The determination manner of the order information may be, but is not limited to, based on the number of tiles indicated by the tile indication information in descending or ascending order, or a tile threshold, etc. The tile threshold represents the maximum number of tiles that the rendering core may process.

For example, the GPU includes rendering cores Core0 to Core2, and each rendering core may process four tiles. If the tile indication information for the rendering core Core0 is 0, the tile indication information for the rendering core Core1 is 2, and the tile indication information for the rendering core Core2 is 4, based on the tile indication information for each rendering core:

all rendering cores are sorted in ascending order as: Core2, Core1, and Core0, then the order information of Core0 to Core2 is: 3, 2, and 1 respectively;

all rendering cores are sorted based on the tile threshold as: Core1, Core2, and Core0, then the order information of Core0 to Core2 is: 3, 1, and 2 respectively. During implementation, the order information may be obtained by moving the rendering core that satisfies a condition (e.g., fully loaded, busy, etc.) to the end, without the need to compare each rendering core with the condition. For example, if the tile indication information for the rendering core Core0 and the tile indication information for the rendering core Core2 are both 0, and the tile indication information for the rendering core Core1 is 2, all rendering core are sorted based on the tile threshold as: Core1, Core2, and Core0. That is, since Core0 satisfies the condition, Core0 is moved to the end; since Core1 does not satisfy the condition, there is no need to further determine whether Core2 satisfies the condition.

In some implementations, the order information of different rendering cores may be the same or different. For example, when the tile indication information for the rendering core Core1 and the tile indication information for the rendering core Core2 are the same, the order information of the rendering core Core1 and the order information of the rendering core Core2 may be the same. For another example, when the tile indication information for the rendering core Core1 and the tile indication information for the rendering core Core2 are the same, the order information of the rendering core Core1 and the order information of the rendering core Core2 are further distinguished based on the naming, the state information, and the like. Here, the state information may include, but is not limited to, a busy state, an idle state, and the like.

The determination manner for the target rendering core may include, but is not limited to, random, custom, first, sequential, and the like. For example, a rendering core whose order information is first is taken as a target rendering core. For another example, a rendering core is randomly selected as the target rendering core from multiple rendering cores having the same order information.

In some implementations, each rendering core may be sorted based on tile indication information for each rendering core and naming information of each rendering core, to obtain order information of each rendering core.

For example, when the tile indication information for the rendering core Core1 and the tile indication information for the rendering core Core2 are the same, the order information of the rendering core Core1 may be determined as 1 and the order information of the rendering core Core2 may be determined as 2 based on the naming information of the rendering core Core1 and the rendering core Core2.

In some implementations, for each rendering core, the rendering core may be sorted based on tile indication information for the rendering core and state information of the rendering core to obtain order information of the rendering core.

For example, the GPU includes rendering cores Core0 to Core2, and each rendering core is sorted based on the tile indication information for each rendering core, to obtain the first order information of 3, 1, and 2 for the rendering cores Core0 to Core2, respectively. Since the rendering core Core1 is in a busy state, the first order information is updated based on the state information of each rendering core, to obtain the order information of 3, 2, and 1 for the rendering cores Core0 to Core2, respectively.

In some implementations, if a target layer to-be-rendered includes multiple target tiles, all rendering cores may be target rendering cores, and this target layer to-be-rendered may be allocated to all rendering cores. For example, if the GPU includes four rendering cores Core0 to Core3, and each rendering core may process 4 tiles, when the target layer to-be-rendered includes 8 target tiles, these 8 target tiles may be allocated to at least two rendering cores, for example, each of Core0 and Core1 is allocated 4 target tiles. For another example, Core0 is allocated 1 target tile, Core1 is allocated 4 target tiles, and Core2 is allocated 3 target tiles. When the target layer to-be-rendered includes at least 10 target tiles, the at least 10 target tiles may be allocated to each rendering core, that is, Core0 is allocated 1 target tile, each of Core1 and Core2 is allocated 4 target tiles, and Core3 is allocated 1 target tiles.

FIG. 1G is a schematic diagram of target layers to-be-rendered and rendering cores according to an embodiment of the present disclosure. As illustrated in FIG. 1G, the GPU includes 8 rendering cores Core0 to Core7, each rendering core may process 4 tiles, and the target layer to-be-rendered includes layer0 to layer2047, herein:

when layer0 includes at least 26 target tiles, each target tile of layer0 is allocated to Core0 to Core7, that is, Core0 is allocated 1 target tile, each of Core1 to Core6 is allocated 4 target tiles, and Core7 is allocated 1 target tiles, cycling through this mode to complete the allocation of target tiles across the 2048 target layers to-be-rendered.

In the rendering process by the backend module, since the size of each target layer to-be-rendered is the same, the starting address of the target layer to-be-rendered to which the target tile belongs in the memory of the GPU may be determined based on the base address of the RTA (Render Target Array), the size of each target layer to-be-rendered and the layer identifier of the target layer to-be-rendered to which the target tile belongs; and then the target address, in the memory of the GPU, of the rendering data (including color, depth, texture, etc.) of the target tile may be determined based on the information carried in the target tile.

During implementation, the starting address LayerRtBaseAddress, in the memory of the GPU, of the target layer to-be-rendered to which the target tile belongs may be calculated based on the following formula (1-1):

$$LayerRtBaseAddress = RtBaseAddress + LayerRtSize*rta\_idx \ (1\text{-}1);$$

herein, RtBaseAddress is the base address of the RTA, LayerRtSize is the size of the target layer to-be-rendered, and rta_idx is the layer identifier of the target layer to-be-rendered to which the target tile belongs.

FIG. 1H is a schematic diagram of storage positions of multiple layers to-be-rendered in a memory of a GPU according to an embodiment of the present disclosure. As illustrated in FIG. 1H, each layer to-be-rendered has the same size; and each layer to-be-rendered is stored sequentially based on the layer identifier of each layer to-be-rendered, that is, the starting address of the storage position 171 of the first layer to-be-rendered (layer0) is the base address of the RTA, the starting address of the storage position 172 of the second layer to-be-rendered (layer1) is "base address + layer size * 1", and the starting address of the storage position 173 of the third layer to-be-rendered (layer2) is "base address + layer size * 2".

The information carried in the target tile may include, but is not limited to, a layer identifier of a target layer to-be-rendered to which the target tile belongs, position information of the target tile in the target layer to-be-rendered, and a resource index identifier of the target layer to-be-rendered. During implementation, the information carried in the target tile may be implemented in the form of structs, key-value pairs, tables, or the like. For example, information carried in the target tile is defined by the following struct Tile_Info:

```
typedef struct Tile_Info
{
uint16_t tile_x;
uint16_t tile_y;
uint16_t rta_idx;
uint8_t layer_id;
}
```

herein, tile_x and tile_y are used to represent position information of the target tile in the target layer to-be-rendered, rta_idx is used to represent a layer identifier of the target layer to-be-rendered to which the target tile belongs, and layer_id is used to represent a resource index identifier of the target layer to-be-rendered to which the target tile belongs.

In the embodiment of the present disclosure, by using the layer valid identification information to determine multiple valid target layers to-be-rendered, the merging of multiple layers to-be-rendered is achieved. On the one hand, compared with performing one initialization operation for each layer, the initialization of the multiple layers to-be-rendered is performed through a single initialization operation, which not only shortens the initialization duration, but also reduces the resource consumption of hardware. On the other hand, compared with the rendering of the subsequent layer having to wait for completion of the rendering of the previous layer, processing for the multiple target layers to-be-rendered can be performed simultaneously, so that the continuity between the multiple target layers to-be-rendered in hardware can be ensured, thereby reducing the idle time of the GPU, and thus further improving the utilization rate of the GPU and reducing the possibility of hardware performance degradation caused by pipeline stalls. At the same time, the target rendering core for the target tile is determined based on the tile indication information for each rendering core, which reduces the possibility of wasting hardware resources due to the idle states caused by underutilization of some rendering cores, thereby balancing the load across individual rendering cores, improving the rendering efficiency, and further improving the overall rendering performance of the graphics processor.

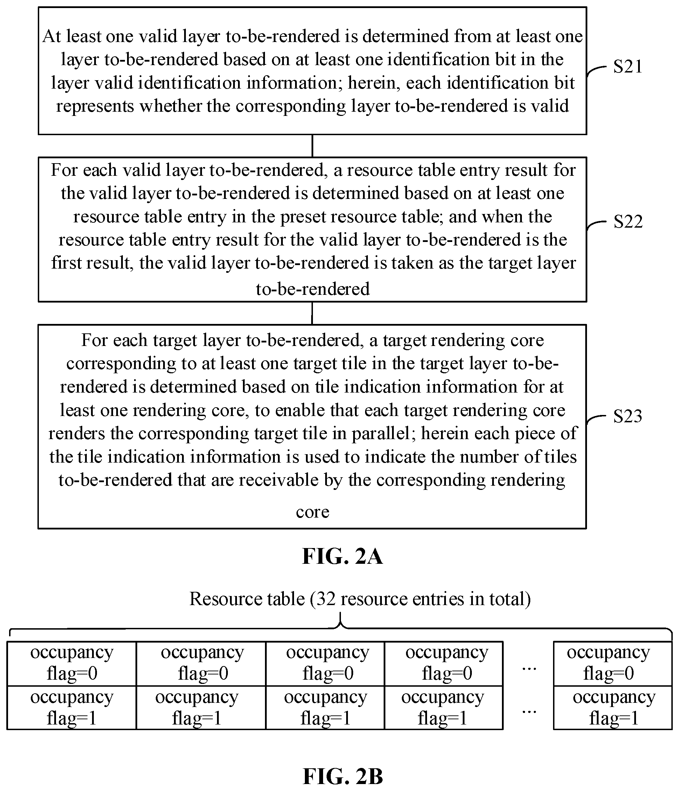

FIG. 2A is a second schematic flowchart of an implementation of a method for controlling tile distribution according to an embodiment of the present disclosure. As illustrated in FIG. 2A, the method includes operations S21 to S23.

In operation S21: at least one valid layer to-be-rendered is determined from at least one layer to-be-rendered based on at least one identification bit in the layer valid identification information; herein, each identification bit respectively indicates whether the corresponding layer to-be-rendered is valid.

Here, each identification bit represents a layer to-be-rendered, and the value of the identification bit is used to determine whether the corresponding layer to-be-rendered is valid.

The number of valid layers to-be-rendered may be at least one. A valid layer to-be-rendered is a layer to-be-rendered that is valid. During implementation, the identification bit may be compared with the first preset condition to determine whether the layer to-be-rendered is a valid layer to-be-rendered. The first preset condition may be any suitable condition, such as a preset value.

In some embodiments, the operation S21 includes operation S211.

In operation S211: for each identification bit in the layer valid identification information, when the identification bit satisfies a first preset condition, the layer to-be-rendered corresponding to the identification bit is taken as a valid layer to-be-rendered.

Here, each identification bit represents a layer to-be-rendered. Then, the layer valid identification information may be traversed from the Least Significant Bit (LSB) to the Most Significant Bit (MSB); and when an identification bit satisfies the first preset condition, the layer to-be-rendered corresponding to this identification bit is taken as a valid layer to-be-rendered. On the contrary, when the identification bit does not satisfy the first preset condition, it indicates that the layer to-be-rendered corresponding to this identification bit is invalid, and no subsequent processing is required for the layer to-be-rendered. For example, for the 10-th layer to-be-rendered, if the value of the identification bit (bit9) is 1 (corresponding to the first preset condition), the 10-th layer to-be-rendered is taken as a valid layer to-be-rendered.

In operation S22: for each valid layer to-be-rendered, a resource table entry result for the valid layer to-be-rendered is determined based on at least one resource table entry in the preset resource table; and when the resource table entry result for the valid layer to-be-rendered is the first result, the valid layer to-be-rendered is taken as the target layer to-be-rendered.

Here, the resource table is used to record the information of the layers currently being rendered by the pipeline. The number of resource table entries may be any suitable number; For example, the number of resource table entries may be 16, 32, or 48, etc. During implementation, the number of resource table entries represents the number of layers that the GPU may render simultaneously.

FIG. 2B is a schematic diagram of a resource table according to an embodiment of the present disclosure. As illustrated in FIG. 2B, the resource table includes 32 resource table entries, among which 16 of the 32 resource table entries are occupied (occupancy flag = 1), and 16 are unoccupied (occupancy flag = 0).

The resource table entry result may include, but is not limited to, a first result, a second result, and the like. The first result indicates that the resource table entry allocation for the valid layer to-be-rendered is successful, and the second result indicates that the resource table entry allocation for the valid layer to-be-rendered is unsuccessful.

In some implementations, "determining a resource table entry result for the valid layer to-be-rendered based on at least one resource table entry in the preset resource table" in operation S22 includes operations S221 to S222.

In operation S221: each resource table entry in the resource table is sequentially traversed, a resource index identifier for the valid layer to-be-rendered is determined based on the occupancy flag of the currently traversed resource table entry, and the traversing is stopped when the resource index identifier is not a preset index identifier.

Here, the resource table entry may include, but is not limited to, an occupancy flag, an index identifier, and the like. Among them, the occupancy flag is used to indicate whether the resource table entry is occupied. The index identifier is used to indicate the position of the resource table entry in the resource table.

Different values of the occupancy flag are used to indicate whether the resource table entry is occupied. For example, when the value of the occupancy flag is the first value, it indicates that the resource table entry is occupied; and when the value of the occupancy flag is the second value, it indicates that the resource table entry is unoccupied. During implementation, the value of the occupancy flag may be represented in any suitable manner. For example, the first value is 1, and the second value is 0; or the first value is "True" and the second value is "False".

The resource index identifier represents resource identification information of the valid layer to-be-rendered; and through the resource index identifier, it may be determined whether the resource table entry allocation for the valid layer to-be-rendered is successful. The resource index identifier may include, but is not limited to, a preset index identifier, an index identifier of a resource table entry, and the like. The preset index identifier may be any suitable value. For example, the preset index identifier may be 0xff, or -1, etc. During implementation, the preset index identifier is different from the index identifier of each resource table entry in the resource table. In this way, based on the resource index identifier, the resource table entry result of the valid layer to-be-rendered can be accurately obtained.

For example, when the occupancy flag of the currently traversed resource table entry indicates that this resource table entry is unoccupied, the index identifier of the resource table entry may be taken as the resource index identifier; conversely, when the occupancy flag of the currently traversed resource table entry indicates that the resource table entry is occupied, the preset index identifier may be taken as the resource index identifier.

During implementation, multiple resource table entries in the resource table entries are sequentially traversed based on a preset traversal manner; when the occupancy flag of the currently traversed resource table entry indicates that this resource table entry is unoccupied, the index identifier of this resource table entry may be taken as the resource index identifier, and the traversal is stopped; conversely, when the occupancy flag of the currently traversed resource table entry indicates that this resource table entry is occupied, the preset index identifier may be taken as the resource index identifier, and the traversal continues. Here, the traversal manner may be any suitable traversal manner, for example, traversing from front to back, or traversing from back to front, etc.

If the occupancy flags of all resource table entries in the resource table indicate that the corresponding resource table entries are occupied, in this case, it is necessary to wait until the occupancy flag of at least one resource table entry in the resource table indicates that the corresponding resource table entry is unoccupied.

In some implementations, the operation S221 includes operation S2211 and/or operation S2212.

In operation S2211: when the occupancy flag of the currently traversed resource table entry is a preset occupancy flag, the index identifier of the resource table entry is taken as the resource index identifier of the valid layer to-be-rendered.

Here, the preset occupancy flag is used to indicate that the resource table entry is unoccupied. During implementation, the preset occupancy flag may be any suitable occupancy flag. For example, the preset occupancy flag may be "False", "0", or the like. If the occupancy flag of the resource table entry is the same as the preset occupancy flag, it indicates that the resource table entry is unoccupied. For example, when the preset occupancy flag is 0, and if the occupancy flag of the resource table entry T6 is also 0, it indicates that the resource table entry is unoccupied, the index identifier 6 of the resource table entry T6 may be taken as the resource index identifier of the valid layer to-be-rendered.

In operation S2212, when the occupancy flag of the currently traversed resource table entry is not the preset occupancy flag, the preset index identifier is taken as the resource index identifier of the valid layer to-be-rendered.

Here, if the occupancy flag of the resource table entry is different from the preset occupancy flag, it indicates that the resource table entry is occupied. For example, when the preset occupancy flag is 0, and if the occupancy flag of the resource table entry T6 is 1, it indicates that the resource table entry is occupied, the preset index identifier 0xff may be taken as the resource index identifier of the valid layer to-be-rendered.

In operation S222: a resource table entry result of the valid layer to-be-rendered is determined based on the resource index identifier.

Here, the resource index identifier may be compared with the preset index identifier to obtain the resource table entry result for the valid layer to-be-rendered. For example, when the resource index identifier is the same as the preset index identifier, it indicates that all resource table entries in the resource table are occupied, that is, the resource table entry allocation for the valid layer to-be-rendered is unsuccessful; in this case, the second result may be taken as the resource table entry result for the valid layer to-be-rendered. Conversely, when the resource index identifier is different from the preset index identifier, it indicates that a resource table entry in the resource table is unoccupied, and this resource table entry is allocated to a valid layer to-be-rendered, that is, the resource table entry allocation for the valid layer to-be-rendered is successful, and in this case, the first result may be taken as the resource table entry result for the valid layer to-be-rendered.

In some implementations, the operation S222 includes operation S2221 and/or operation S2222.

In operation S2221, when the resource index identifier is not a preset index identifier, the first result is taken as a resource table entry result for the valid layer to-be-rendered.

Here, if the resource index identifier is different from the preset index identifier, it indicates that a resource table entry in the resource table is unoccupied, and this resource table entry is allocated to a valid layer to-be-rendered, then the first result may be taken as the resource table entry result for the valid layer to-be-rendered.

In operation S2222, when the resource index identifier is the preset index identifier, the second result is taken as the resource table entry result for the valid layer to-be-rendered.

Here, if the resource index identifier is the same as the preset index identifier, it indicates that all resource table entries in the resource table are occupied, that is, the resource table entry allocation for the valid layer to-be-rendered is unsuccessful, then the second result may be taken as the resource table entry result for the valid layer to-be-rendered.

In operation S23: for each target layer to-be-rendered, a target rendering core corresponding to at least one target tile in the target layer to-be-rendered is determined based on tile indication information for at least one rendering core, to enable that each target rendering core renders the corresponding target tile in parallel; herein each piece of the tile indication information is used to indicate the number of tiles to-be-rendered that are receivable by the corresponding rendering core.

Here, the above operation S23 corresponds to the above operation S12, and during implementation, reference may be made to the specific implementation of the above operation S12.

In an embodiment of the present disclosure, on the one hand, multiple layers to-be-rendered are filtered by using an identification bit corresponding to each layer to-be-rendered, thereby improving the accuracy of the valid layer to-be-rendered. On the other hand, by determining whether to take each valid layer to-be-rendered as the target layer to-be-rendered based on the resource table entry result for each valid layer to-be-rendered, the performance of the GPU is comprehensively considered. Compared with directly taking each valid layer to-be-rendered as the target layer to-be-rendered, this method not only improves the accuracy of the target layer to-be-rendered, but also improves the rendering efficiency.

In some implementation, the method further includes operation S24.

In operation S24: for each target layer to-be-rendered, a first target resource table entry is determined from at least one resource table entry in the resource table based on the resource index identifier of the target layer to-be-rendered, and the first target resource table entry is updated based on the layer identifier of the target layer to-be-rendered.

Here, since each resource table entry has an index identifier, during implementation, the index identifier that is the same as the resource index identifier of the target layer to-be-rendered may be found among the multiple index identifiers, and the resource table entry corresponding to the found index identifier is taken as the first target resource table entry. For example, the resource table includes 32 resource table entries, and the index identifiers of the 32 resource table entries are 0 to 31, respectively. If the resource index identifier of the target layer to-be-rendered is 6, the 7-th resource table entry corresponding to the index identifier of 6 is taken as the first target resource table entry.

The resource table entry may include, but is not limited to, an occupancy flag, a layer identifier, a last layer flag, and the like. During implementation, a resource table entry may be represented in the form of a struct, a table, or the like.

For example, a resource table entry is defined by the following struct LayerEntry:

```
typedef struct LayerEntry

{

    bool unfree;      // Occupancy flag

    uint16 rta_idx;   // Layer identifier

    bool last_layer;   // Last layer flag

}TLAYER_ID_TABLE[LID_TABLE_SIZE];
```

here LID_TABLE_SIZE is the number of resource table entries included in the resource table.

Then, the request of the resource table entry for the valid layer to-be-rendered may be implemented through the function AllocateLayerID (), that is:

```
uint8_t AllocateLayerID (uint16 uRtaIdx, bool bLastLayer)

{

  uint8_t uLayerId = 0xff;

  while (uLayerId == 0xff)

  {

    for (uint8_t i=0; i<MAX_ENTRY_NUM; i++)

    {

      if (LAYER_ID_TABLE[i].unfree==0)

      {

        LAYER_ID_TABLE[i].unfree = 1;

        LAYER_ID_TABLE[i].rta_idx= uRtaIdx;

        LAYER_ID_TABLE[i].last_layer = bLastLayer;

        uLayerId = i;

        break;

      }

    }

    if (uLayerId == 0xff)

      wait(lid_tlb_free_event);

  }

  return uLayerId;

}
```

herein, uRtaIdx represents an identifier of a valid layer to-be-rendered, and each resource table entry in the resource table is traversed through a for loop:

if the occupancy flag of the i-th resource table entry is 0, it indicates that the i-th resource table entry is unoccupied, at this time, the occupancy flag of the i-th resource table entry is updated to 1, the identifier of the valid layer to-be-rendered is taken as the layer of the i-th resource table entry, the passed-in bLastLayer is taken as the last layer identifier of the i-th resource table entry, and the index identifier of the i-th resource table entry is taken as a return value uLayerId (corresponding to the resource index identifier of the valid layer to-be-rendered) to complete the request for the resource table entry and stop further traversal;

if the occupancy flags of all resource table entries are 1, it indicates that all resource table entries are occupied. At this time, 0xff is taken as the return value uLayerId, and the resource table entry release event lid_tlb_free_event is waited for to execute the function AllocateLayerID () again.

In an implementation of the present disclosure, for each target layer to-be-rendered, a first target resource table entry is determined from at least one resource table entry in the resource table based on a resource index identifier of the target layer to-be-rendered, and the first target resource table entry is updated based on a layer identifier of the target layer to-be-rendered. In this way, by updating the first target resource table entry based on the layer identifier of the target layer to-be-rendered, the possibility of allocating multiple layers to-be-rendered to the same resource table entry can be reduced, thereby improving rendering efficiency.

In some implementations, the method further includes operation S25.

In operation S25: for each target layer to-be-rendered, in response to detecting that the rendering state of the target layer to-be-rendered is in a completed state, a second target resource table entry from at least one resource table entry in the resource table is determined based on a resource index identifier of the target layer to-be-rendered, and the second target resource table entry is reset.

Here, the rendering state may include, but is not limited to, a completed state, an uncompleted state, and the like. During implementation, different rendering states may be represented in any suitable manner. For example, "1" represents a completed state, and "0" represents an uncompleted state.

Since each resource table entry has an index identifier, during implementation, an index identifier that is the same as the resource index identifier of the target layer to-be-rendered may be found among the multiple index identifiers, and the resource table entry corresponding to the found index identifier may be taken as the second target resource table entry. For example, the resource table includes 32 resource table entries, and the index identifiers of the 32 resource table entries are 0 to 31, respectively. If the resource index identifier of the target layer to-be-rendered is 8, the 9-th resource table entry corresponding to the index identifier of 8 is taken as the second target resource table entry.

The resource table entry may include, but is not limited to, an occupancy flag, a layer identifier, a last layer flag, and the like. To reset the second target resource table entry, all information of the second target resource table entry needs to be initialized.

For example, a resource table entry is reset through the following function ReleaseLayerID():

```
void ReleaseLayerID(const uint8_t uLayerId)
{
    LAYER_ID_TABLE[uLayerId] .unfree= 0;
    LAYER_ID_TABLE[uLayerId].rta_idx= 0xffff;
    LAYER_ID_TABLE[uLayerId].last_layer = 0;
    notify(lid_tlb_free_event);
}
```

Herein, the occupancy flag, the layer identifier, and the last layer flag of a certain resource table entry are reset, and a notification of the resource table entry release event lid_tlb_free_event is sent.

In an implementation of the present disclosure, for each target layer to-be-rendered, in response to detecting that the rendering state of the target layer to-be-rendered is a completed state, a second target resource table entry is determined from at least one resource table entry in the resource table based on a resource index identifier of the target layer to-be-rendered, and the second target resource table entry is reset. In this way, by resetting the second target resource table entry based on the layer identifier of the target layer to-be-rendered, the resource table entry can be released in a timely manner, facilitating the request for the resource table entry by other layers to-be-rendered, thereby improving the rendering efficiency.

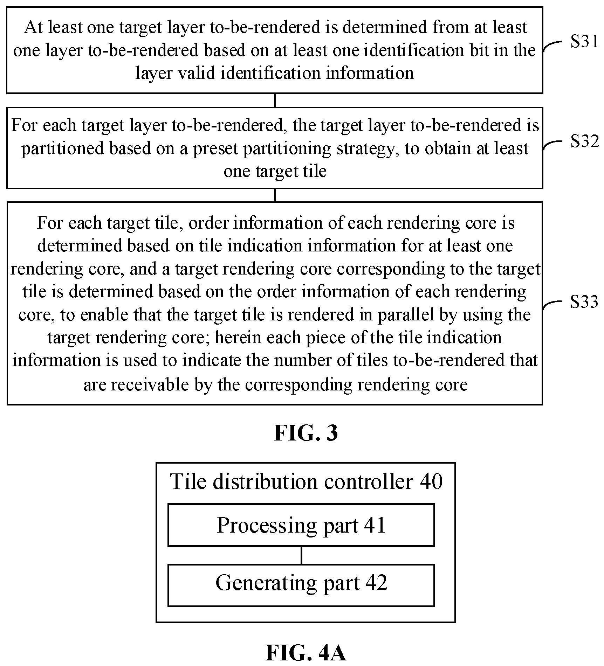

FIG. 3 is a third schematic flowchart of an implementation of a method for controlling tile distribution according to an embodiment of the present disclosure. As illustrated in FIG. 3, the method includes operations S31 to S33.

In operation S31: at least one target layer to-be-rendered is determined from at least one layer to-be-rendered based on at least one identification bit in the layer valid identification information.

Here, the above operation S31 corresponds to the above operation S11, and during implementation, reference may be made to the specific implementation of the above operation S11.

In operation S32: for each target layer to-be-rendered, the target layer to-be-rendered is partitioned based on a preset partitioning strategy to obtain at least one target tile.

Here, the partitioning strategy may include, but is not limited to, a partitioning manner, a partitioning length, a partitioning quantity, and the like. The partitioning manner may include, but is not limited to, uniform partitioning, random partitioning, non-uniform partitioning, and the like. For example, the target layer to-be-rendered is evenly partitioned into 6 target tiles. For another example, the target layer to-be-rendered is partitioned according to any suitable preset size (such as 16 * 16), to obtain multiple target tiles.

In operation S33: for each target tile, order information of each rendering core is determined based on tile indication information for at least one rendering core, and a target rendering core corresponding to the target tile is determined based on the order information of each rendering core, to enable that the target tile(s) is rendered in parallel by using the target rendering core; herein each piece of the tile indication information is used to indicate the number of tiles to-be-rendered that are receivable by the corresponding rendering core.

Here, each piece of tile indication information is used to indicate the number of tiles to-be-rendered that are receivable by the corresponding rendering core. For example, the tile indication information for the rendering core Core0 of the GPU is 4, indicating that the rendering core Core0 may receive 4 tiles to-be-rendered.

The order information represents the order of the rendering core in the arrangement. For example, when the GPU includes 4 rendering cores Core0 to Core3, and the default arrangement order of Core0 to Core3 is Core0, Core1, Core2, and Core3, the order information of Core0 is 1, the order information of Core1 is 2, the order information of Core2 is 3, and the order information of Core3 is 4.

The determination manner of the order information may be, but is not limited to, based on the number of tiles indicated by the tile indication information in descending or ascending order, or a tile threshold, etc. For example, the GPU includes rendering cores Core0 to Core3, and each rendering core can process 4 tiles. If the tile indication information for the rendering cores Core0 to Core3 is 0, 2, 4, and 4, respectively, then according to the tile indication information for each rendering core, the rendering cores are sorted based on the tile threshold as follows: Core1, Core2, Core3, and Core0, and thus the order information for Core0 to Core3 is 4, 1, 2, and 3, respectively.

In some implementations, the order information for different rendering cores may be the same or different. During implementation, when the order information for different rendering cores is the same, the order information for different rendering cores may be further determined based on at least one of naming, state information, and the like. For example, the order information for each rendering core is determined based on the tile indication information for each rendering core and the naming information of each rendering core. For another example, the order information for each rendering core is determined based on the tile indication information for each rendering core and the state information of each rendering core. For another example, the order information for each rendering core is determined based on the tile indication information for each rendering core, the state information of each rendering core, and the naming information of each rendering core.

In some implementations, "determining order information for each rendering core based on tile indication information for at least one rendering core" in operation S33 includes operation S331.

In operation S331: for each rendering core, when the tile indication information for the rendering core satisfies the second preset condition, the order information of each rendering core is determined based on previous order information of each rendering core.

Here, the second preset condition may be any suitable condition capable of representing the tile threshold. For example, the second preset condition is a preset value, such as 0. For another example, the second preset condition is full load, herein, the full load represents that the rendering core includes a number of tiles to-be-rendered equal to the tile threshold. During implementation, when the tile indication information for the rendering core does not satisfy the second preset condition, the previous order information of each rendering core is taken as the order information of each rendering core.

The previous order information may be default order information, or may be order information at a previous moment. During implementation, the default order information may be determined based on naming, state information, and the like. For example, the GPU includes the rendering cores Core0 to Core3, and based on the naming, the default order information of the rendering cores Core0 to Core3 is determined to be 1, 2, 3, and 4, respectively. In some implementation, when determining the order information of the rendering core for the first time, the previous order information may be default order information; when determining the order information of the rendering core not for the first time, the previous order information is the order information at the previous moment.

During implementation, each rendering core is traversed, and during the traversal, the previous order information is updated in real time to obtain the current order information (corresponding to the aforementioned order information).

For example, the GPU includes rendering cores Core0 to Core3; the tile indication information for the rendering cores Core0 to Core3 is 0, 0, 2, and 4, respectively; the tile threshold is 4, and based on the naming, the default order information for the rendering cores Core0 to Core3 is determined to be 1, 2, 3, and 4, respectively; then the rendering cores Core0 to Core3 are traversed:

for the first time: for the rendering core Core0, since the tile indication information of the rendering core Core0 is 0, indicating that Core0 has a number of tiles to-be-rendered equal to the tile threshold, satisfying the second preset condition, the previous order information (default order information) for the rendering cores Core0 to Core3 is 1, 2, 3, and 4, respectively, then the current order information for the rendering cores Core0 to Core3 is 4, 1, 2, and 3, respectively;

for the second time: for the rendering core Core1, since the tile indication information of the rendering core Core1 is 0, indicating that Core1 has a number of tiles to-be-rendered equal to the tile threshold, satisfying the second preset condition, the previous order information for the rendering cores Core0 to Core3 is 4, 1, 2, and 3, respectively, then the current order information for the rendering cores Core0 to Core3 is 3, 4, 1, and 2, respectively;

for the third time: for Core2, since the tile indication information of the rendering core Core2 is 2, which is less than the tile threshold, not satisfying the second preset condition, the previous order information for the rendering cores Core0 to Core3 is taken as the current order information, that is, the current order information of the rendering cores Core0 to Core3 is 3, 4, 1, and 2, respectively;

for the fourth time: for the rendering core Core3, since the tile indication information of the rendering core Core3 is 4, which is less than the tile threshold, not satisfying the second preset condition, the previous order information for the rendering cores Core0 to Core3 is taken as the current order information, that is, the current order information for the rendering cores Core0 to Core3 is 3, 4, 1, and 2, respectively.

The determination manner of the target rendering core may include, but is not limited to, random, custom, first, sequential, and the like. For example, a rendering core whose order information is first is taken as a target rendering core.

In some embodiments, "determining a target rendering core corresponding to the target tile based on the order information of each rendering core" in operation S33 includes operation S341.

In operation S341: each rendering core is traversed based on the order information of each rendering core, and a first rendering core that does not satisfy the second preset condition is taken as a target rendering core corresponding to the target tile.

Here, different order information may be used to represent the same meaning, and then the traversal manner may include, but is not limited to, ascending or descending order, etc. For example, when the GPU includes the rendering cores Core0 to Core2, and the tile indication information for the rendering cores Core0 to Core2 is 0, 2, and 4, respectively, the order information for the rendering cores Core0 to Core2 may be 3, 1, and 2, respectively; or may be 1, 3, and 2, respectively. For the rendering core Core0, the order information of the rendering core Core0 may be 3 or 1; and when the order information of the rendering core Core0 is 3, the traversal may be performed in an ascending traversal manner; when the order information of the rendering core Core0 is 1, the traversal may be performed in a descending traversal manner.

During implementation, in general, the first rendering core traversed does not satisfy the second preset condition, so the first rendering core traversed may be taken as the target rendering core. When the first rendering core traversed satisfies the second preset condition, it indicates that all the rendering cores are currently in a fully loaded state, and at this time, the tile indication information for each rendering core may be reset, and the order information of each rendering core may be re-determined based on the tile indication information, the name, the state information, and the like, so as to facilitate the next round of tile distribution.

In the embodiment of the present disclosure, on the one hand, by determining the order information of each rendering core based on the tile indication information for each rendering core, this manner not only improves the accuracy of the order information to facilitate the determination of subsequent target rendering cores, but also ensures that the probability of each rendering core being used is basically the same, thereby improving the load balancing capability of the GPU. On the other hand, by determining the target rendering core based on the order information of each rendering core, compared with randomly or arbitrarily allocating rendering cores, this manner improves the accuracy of the target rendering core, thereby improving rendering efficiency.

In some implementations, the method further includes operation S34.

In operation S34: for each target tile, in response to allocating the target tile to the corresponding target rendering core, tile indication information for the target rendering core corresponding to the target tile is updated.

Here, after the target tile is allocated to the target rendering core, the tile indication information is required to be updated in time. For example, the tile indication information for the rendering core Core1 is 2, and if the target tile is allocated to the rendering core Core1, the tile indication information for the rendering core Core1 should be 1. In this way, by updating the tile indication information for the target rendering core in time, the possibility that the target tile cannot be rendered in time due to the allocation error (for example, exceeding the threshold) of the target tile can be reduced, thereby improving the rendering efficiency.

In some implementations, the method further includes operation S35.

In operation S35: in response to the tile indication information for each rendering core satisfying the second preset condition, the tile indication information for each rendering core is reset.

Here, if each piece of tile indication information satisfies the second preset condition, it indicates that all rendering cores are fully loaded, then, each piece of tile indication information may be reset. That is, the tile indication information may be set to a default value. The default value may be any suitable value. For example, the default value may be 0, or -1, or the like. In this way, by resetting all the tile indication information in time, the next round of tile distribution can be facilitated.

Based on the above embodiments, an embodiment of the present disclosure provides a tile distribution controller. FIG. 4A is a first schematic diagram of a composition structure of a tile distribution controller according to the embodiment of the present disclosure. As illustrated in FIG. 4A, the tile distribution controller 40 includes a processing part 41 and a generating part 42.

The processing part 41 is configured to determine at least one target layer to-be-rendered from at least one layer to-be-rendered based on at least one identification bit in the layer valid identification information.

The generating part 42 is configured to: for each target layer to-be-rendered, determine a target rendering core corresponding to at least one target tile in the target layer to-be-rendered based on tile indication information for at least one rendering core, to enable that each target rendering core renders the corresponding target tile in parallel; herein, each piece of the tile indication information is used to indicate the number of tiles to-be-rendered that are receivable by the corresponding rendering core.

Here, the GPU includes a preset number of rendering cores. For example, the preset number may be 4, 8, or the like. The processing part 41 may be any suitable software module and/or hardware module capable of implementing the function, and the generating part 42 may be any suitable software module and/or hardware module capable of implementing the function. During implementation, the functions implemented by the processing part 41 may be referred to the specific implementation of operation S11 described above. The functions implemented by the generating part 42 may be referred to the specific implementation of operation S12 described above.

In some implementations, the controller 40 further includes a port part. The processing part is further configured to: in response to receiving the rendering command, obtain the layer valid identification information from the memory by using the port part, and store the layer valid identification information in a buffer part of the controller.

Here, the port part may be any suitable part capable of implementing a communication function. The port part may communicate with other parts.

The rendering command may be a flush command for indicating that the GPU currently needs to process the received multiple draw call (drawcall) commands. During implementation, when a rendering operation needs to be performed, the Central Processing Unit (CPU ) will call the graphical programming interface built in the operating system to send multiple draw call (drawcall) commands to the GPU in order to command the GPU to perform rendering operations.

The memory may be a memory of the GPU. During implementation, since the frontend module of the TBR architecture generates the layer valid identification information and stores the layer valid identification information in the memory, the layer valid identification information can be obtained by reading the memory.

The buffer part may be any suitable part capable of implementing storage functions, such as on-chip memory, a certain segment of storage space in on-chip memory, etc.

In some implementations, the controller 40 further includes a buffer part. The buffer part is configured to store the layer valid identification information. The processing part is further configured to obtain the layer valid identification information from the buffer part.

Here, since the layer valid identification information is pre-stored in the buffer part, the layer valid identification information can be obtained by reading the buffer part.

In some implementations, the controller further includes a preset resource table, the resource table including at least one resource table entry. The processing part is further configured to: for each target layer to-be-rendered, determine a first target resource table entry from at least one resource table entry in the resource table based on the resource index identifier of the target layer to-be-rendered, and update the first target resource table entry based on the layer identifier of the target layer to-be-rendered.

Here, the resource table is used to record the information of layers currently being rendered by the pipeline. The number of resource table entries may be any suitable number. For example, the number of resource table entries may be 16, 32, or 48, etc. Since each resource table entry has an index identifier, and the target layer to-be-rendered is a layer to-be-rendered for which a resource table entry has been successfully allocated, the index identifier of the resource table entry may be taken as the resource index identifier of the target layer to-be-rendered. During implementation, the resource index identifier of the target layer to-be-rendered is taken as the target index identifier, and the resource table entry corresponding to the target index identifier can be quickly obtained from the resource table, and this resource table entry is taken as the first target resource table entry.

The resource table entry may include, but is not limited to, an occupancy flag, a layer identifier, a last layer flag, and the like. In some implementations, a resource table entry may be represented in the form of a struct, an array, or the like. During implementation, the first target resource table entry is updated based on a layer identifier of a target layer to-be-rendered. In this way, by updating the first target resource table entry in a timely manner, the possibility of allocating multiple layers to-be-rendered to the same resource table entry can be reduced, thereby improving rendering efficiency.

In some implementations, the controller 40 further includes a layer rendering state table including a rendering state of each target layer to-be-rendered. The processing part 41 is further configured to: in response to receiving a layer end signal, determine a first target layer to-be-rendered from at least one target layer to-be-rendered in the layer rendering state table, and update a rendering state of the first target layer to-be-rendered to a completed state; determine a second target resource table entry from at least one resource table entry in the resource table based on the resource index identifier of the first target layer to-be-rendered, and reset the second target resource table entry.

Here, the number of rendering states in the layer rendering state table is the same as the number of target layers to-be-rendered. The layer end signal indicates the completion of rendering of a certain layer. During implementation, the layer end signal pbe_eol may be a signal sent by the backend module of the GPU, and the layer end signal carries a layer identifier. After receiving the layer end signal, the layer end signal is parsed to obtain the layer identifier; and based on the layer identifier, the layer rendering state table is traversed to obtain a first target layer to-be-rendered that matches the layer identifier. For the resetting process of the resource table entry, reference may be made to the specific implementation of operation S26.

In some implementations, when the rendering state of a certain target layer to-be-rendered is the completed state, the certain target layer to-be-rendered may be deleted from the layer rendering state table; or the certain target layer to-be-rendered may be marked as the completed state, and the next time the layer end signal is received, the layer rendering state table is traversed, and the certain target layer to-be-rendered is not traversed again.

In some implementations, the processing part 41 is further configured to: in response to receiving the end signal, determine at least one second target layer to-be-rendered from at least one target layer to-be-rendered in the layer rendering state table, and update the rendering state of each second target layer to-be-rendered to a completed state; for each second target layer to-be-rendered, determine a third target resource table entry from at least one resource table entry in the resource table based on a resource index identifier of the second target layer to-be-rendered, and reset the third target resource table entry.

Here, the end signal indicates that all target layers to-be-rendered have been rendered. During implementation, the end signal eor may be a signal sent by the backend module of the GPU, and the layer end signal may or may not carry the layer identifier. After receiving the end signal, the layer rendering state table is traversed, and all target layers to-be-rendered whose rendering state is an uncompleted state are taken as a second target layer to-be-rendered. For the resetting process of the resource table entry, reference may be made to the specific implementation of operation S26.

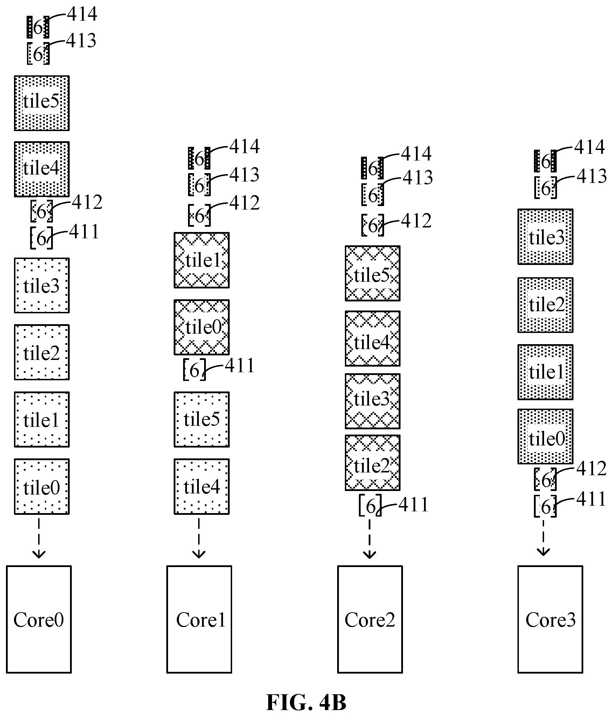

FIG. 4B is a schematic diagram of a target tile distribution according to an embodiment of the present disclosure. As illustrated in FIG. 4B, the GPU includes four rendering cores Core0 to Core3, and three target layers to-be-rendered (layer0 to layer2) are partitioned, and each of layer0 to layer2 includes 6 target tiles tile0 to tile5. If 4 target tiles are sent to Core0 to Core3 in each round, the target tiles in layer0 to layer2 are allocated as follows.

For the first round: the target rendering cores for the four target tiles tile0 to tile3 in layer0 are Core0, and the target rendering cores for the two target tiles tile4 to tile5 in layer0 are Core1. At this time, a first end signal 411 may be sent to each of Core0 to Core3, and the first end signal 411 indicates that the distribution of layer0 is complete. The target rendering cores for the two target tiles tile0 to tile1 in layer1 are Core1, and the target rendering cores for the four target tiles tile2 to tile5 in layer1 are Core2. At this time, a first end signal 412 may be sent to each of Core0 to Core3, and the first end signal 412 indicates that the distribution of layer1 is complete. The target rendering cores for the four target tiles tile0 to tile3 in layer2 are Core3.

For the second round, the target rendering cores for the two target tiles tile0 to tile1 in layer2 are Core0, and at this time, a first end signal 413 may be sent to each of Core0 to Core3, and the first end signal 413 indicates that the distribution of layer2 is completed. During implementation, if the distribution of all target layers to-be-rendered is completed, a second end signal 414 may be sent to each of Core0 to Core3, and the second end signal 414 indicates that the distribution of all target layers to-be-rendered is completed.

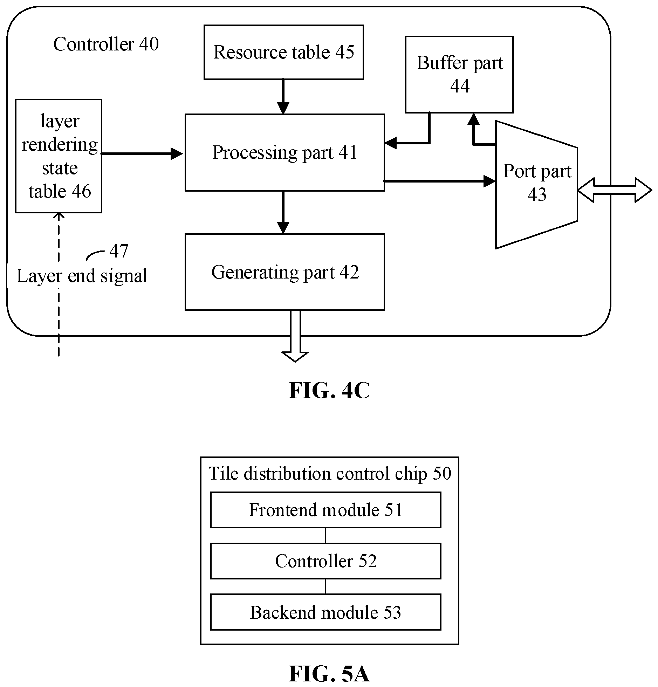

FIG. 4C is a second schematic diagram of a composition structure of a tile distribution controller according to an embodiment of the present disclosure. As illustrated in FIG. 4C, the controller 40 includes a processing part 41, a generating part 42, a port part 43, a buffer part 44, a resource table 45, and a layer rendering state table 46.

The processing part 41 is configured to: when receiving the rendering command, acquire the layer valid identification information from the memory of the GPU through the port part 43, and store the layer valid identification information in the buffer part 44;

The processing part 41 is configured to: obtain the layer valid identification information from the buffer part 44; for each identification bit in the layer valid identification information, determine whether the identification bit satisfies a first preset condition; when the first preset condition is satisfied, determine a resource table entry result of the layer to-be-rendered corresponding to the identification bit based on at least one resource table entry in the resource table 45; when the resource table entry result indicates that the resource table entry allocation is successful, take the layer to-be-rendered as a target layer to-be-rendered, update the first target resource table entry in the resource table 45, and send the target layer to-be-rendered to the generating part 42.

The generating part 42 is configured to: receive the target layer to-be-rendered sent by the processing part 41, partition the target layer to-be-rendered based on a preset partitioning strategy to obtain multiple target tiles, and determine a corresponding target rendering core for each target tile based on the tile indication information for each rendering core.

The processing part 41 is configured to: when receiving the layer end signal 47, determine a first target layer to-be-rendered from the layer rendering state table 46, update the rendering state of the first target layer to-be-rendered to a completed state, and reset the second target resource table entry in the resource table 45 based on the resource index identifier of the first target layer to-be-rendered.

In the embodiment of the present disclosure, the processing part determines multiple valid target layers to-be-rendered by using the layer valid identification information, achieving the merging of the multiple layers to-be-rendered. On the one hand, compared with performing one initialization operation for each layer, the initialization of the multiple layers to-be-rendered is performed through a single initialization operation, which not only shortens the initialization duration, but also reduces the resource consumption of hardware. On the other hand, compared with the rendering of the subsequent layer having to wait for completion of the rendering of the previous layer, processing for the multiple target layers to-be-rendered can be performed simultaneously, so that the continuity between the multiple target layers to-be-rendered in hardware can be ensured, thereby reducing the idle time of the GPU, and thus further improving the utilization rate of the GPU and reducing the possibility of hardware performance degradation caused by pipeline stalls. At the same time, the generating part determines the target rendering core for the target tile based on the tile indication information for each rendering core, which reduces the possibility of wasting hardware resources due to the idle states caused by underutilization of some rendering cores, thereby balancing the load across individual rendering cores, improving the rendering efficiency, and further improving the overall rendering performance of the graphics processor.

In some embodiments, the processing part 41 is further configured to: determine at least one valid layer to-be-rendered from at least one layer to-be-rendered based on at least one identification bit in the layer valid identification information, herein, each identification bit respectively indicates whether the corresponding layer to-be-rendered is valid; for each valid layer to-be-rendered, determine a resource table entry result of the valid layer to-be-rendered based on at least one resource table entry in a preset resource table; and when the resource table entry result of the valid layer to-be-rendered is a first result, take the valid layer to-be-rendered as the target layer to-be-rendered, herein, the first result indicates that the resource table entry allocation for the valid layer to-be-rendered is successful.

In some embodiments, the processing part 41 is further configured to: sequentially traverse at least one resource table entry in the resource table; determine a resource index identifier of the valid layer to-be-rendered based on an occupancy flag of the currently traversed resource table entry, and stop the traversing when the resource index identifier is not a preset index identifier; determine a resource table entry result of the valid layer to-be-rendered based on the resource index identifier.

In some implementations, the processing part 41 is further configured to: when the occupancy flag of the currently traversed resource table entry is a preset occupancy flag, take the index identifier of the resource table entry as the resource index identifier of the valid layer to-be-rendered; and/or, when the occupancy flag of the currently traversed resource table entry is not the preset occupancy flag, take the preset index identifier as the resource index identifier of the valid layer to-be-rendered.

In some implementations, the processing part 41 is further configured to: when the resource index identifier is not a preset index identifier, take the first result as a resource table entry result of the valid layer to-be-rendered; and/or, when the resource index identifier is the preset index identifier, take a second result as a resource table entry result of the valid layer to-be-rendered; herein, the second result indicates that the resource table entry allocation for the valid layer to-be-rendered is unsuccessful.

In some implementations, the processing part 41 is further configured to: for each identification bit in the layer valid identification information, when the identification bit satisfies a first preset condition, take the layer to-be-rendered corresponding to the identification bit as a valid layer to-be-rendered.

In some implementations, the processing part 41 is further configured to: for each target tile, in response to allocating the target tile to the corresponding target rendering core, update tile indication information for the target rendering core corresponding to the target tile; and/or, in response to the tile indication information for each rendering core satisfying the second preset condition, reset the tile indication information for each rendering core.

In some implementations, the generating part 42 is further configured to: partition the target layer to-be-rendered based on a preset partitioning strategy to obtain the at least one target tile; for each target tile, determine order information of each rendering core based on tile indication information for each rendering core; and determine a target rendering core corresponding to the target tile based on the order information of each rendering core.

In some implementations, the generating part 42 is further configured to: for each rendering core, when the tile indication information for the rendering core satisfies a second preset condition, determine order information of the rendering core based on the previous order information of the rendering core.

In some embodiments, the generating part 42 is further configured to: traverse each rendering core based on the order information of each rendering core, and take a first rendering core that does not satisfy the second preset condition as a target rendering core corresponding to the target tile.

The above description of the controller embodiments is similar to the above description of the method embodiments, and has similar beneficial effects as the method embodiments. For technical details not disclosed in the controller embodiments of the present disclosure, reference may be made to the description of the method embodiments of the present disclosure for understanding.

Based on the above embodiments, an embodiment of the present disclosure provides a control chip for tile distribution, which is applied to a graphics processor, and the graphics processor performs a tile distribution process through the TBR architecture. FIG. 5A is a schematic diagram of a composition structure of a control chip for tile distribution according to the embodiment of the present disclosure. As illustrated in FIG. 5A, the tile distribution control chip 50 includes a frontend module 51 of the TBR architecture, a controller 52, and a backend module 53 of the TBR architecture.

The frontend module 51 of the TBR architecture is configured to: determine layer valid identification information based on the image to-be-rendered; herein, the image to-be-rendered includes at least one layer to-be-rendered, and the layer valid identification information includes at least one identification bit.

The controller 52 is configured to: acquire the layer valid identification information determined by the frontend module; determine at least one target layer to-be-rendered from at least one layer to-be-rendered based on at least one identification bit in the layer valid identification information; for each target layer to-be-rendered, determine a target rendering core corresponding to at least one target tile in the target layer to-be-rendered based on tile indication information for at least one rendering core; herein, each piece of the tile indication information is used to indicate the number of tiles to-be-rendered that are receivable by a corresponding rendering core.

The backend module 53 of the TBR architecture is configured to: use each target rendering core to render the corresponding target tile in parallel to complete the rendering of the image to-be-rendered.

Here, the frontend module 51 is similar to the frontend module 110 in FIG. 1B, and reference may be made to the frontend module 110 in FIG. 1B. During implementation, the frontend module 51 is further configured to: specify at least one valid layer to-be-rendered through the GS, generate the layer valid identification information based on the at least one valid layer to-be-rendered specified by the GS, and store the layer valid identification information in the memory of the GPU.

The controller 52 is any one of the above-described controllers, and details may be referred to implementations of the above-described controllers.

The backend module 53 is similar to the above backend module 120 in FIG. 1B, and reference may be made to the above backend module 120 in FIG. 1B. During implementation, since multiple target tiles of multiple layers to-be-rendered are in parallel in the pipeline, it is necessary to improve the address calculation capability of hardware. When it is necessary to read data of target tiles from the memory of the GPU, the address of the target tile in the memory of the GPU needs to be calculated based on the target layer to-be-rendered to which the target tile belongs.

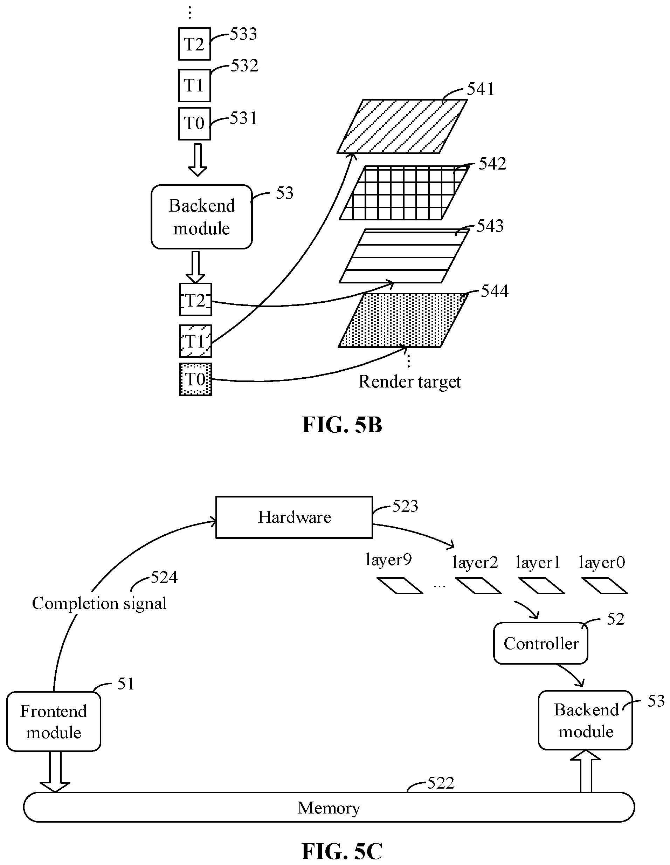

FIG. 5B is a schematic diagram of processing multi-layer rendering through a backend module according to an embodiment of the present disclosure, as illustrated in FIG. 5B:

first, the backend module 53 parses the received target tiles to obtain information carried in the target tiles;
second, the backend module 53 determines the starting address of the first target layer to-be-rendered in the memory of the GPU based on the above formula (1-1), and then determines the target address, in the memory of the GPU, of the rendering data (including color, depth, texture, etc.) of each target tile based on the starting address of the first target layer to-be-rendered and the position information of the target tile in the first target layer to-be-rendered;
finally, the target tiles are rendered into the corresponding layer in RT, that is, the target tile 531 is rendered into the fourth layer 544, the target tile 532 is rendered into the first layer 541, and the target tile 533 is rendered into the third layer 543.

FIG. 5C is a schematic diagram of a multi-layer rendering according to an embodiment of the present disclosure, as illustrated in FIG. 5C:

the primitive data of each layer is output to the memory 522 of the GPU through the frontend module 51;
after receiving the signal 524 indicating that all layers have been processed, the designated hardware 523 kicks down all layers to-be-rendered (layer0 to layer9) to the controller 52 at one time;
the controller 52 obtains the layer valid identification information from the memory 522 of the GPU; determines at least one target layer to-be-rendered from all the layers to-be-rendered based on the layer valid identification information; for each target layer to-be-rendered, determines a target rendering core corresponding to at least one target tile in the target layer to-be-rendered based on the tile indication information for each rendering core; and sends each target tile to the backend module 53 for rendering;
the backend module 53 receives a rendering command; acquires data of at least one target tile in each target layer to-be-rendered from the memory 522 of the GPU; and writes data of at least one target tile in each target layer to-be-rendered to a corresponding position in the RT, to complete rendering of all target layers to-be-rendered. In this way, all the layers to-be-rendered are loaded at one time through the controller 52, and the processing of all the layers to-be-rendered can be completed through one loading.

The above description of the chip embodiments is similar to the above description of the method embodiments, and has similar beneficial effects as the method embodiments. For technical details not disclosed in system embodiments of the present disclosure, reference may be made to the description of method embodiments of the present disclosure for understanding.

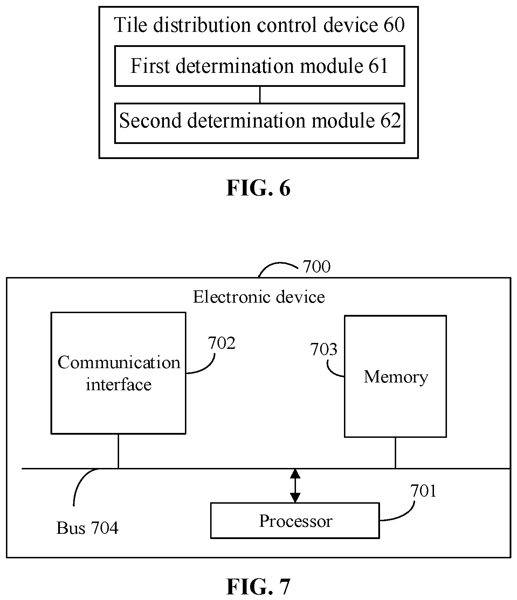

Based on the above embodiments, an embodiment of the present disclosure provides an apparatus for controlling tile distribution. FIG. 6 is a schematic diagram of a composition structure of an apparatus for controlling tile distribution according to the embodiment of the present disclosure. As illustrated in FIG. 6, the apparatus 60 for controlling tile distribution includes a first determination module 61 and a second determination module 62.

The first determination module 61 is configured to: determine at least one target layer to-be-rendered from at least one layer to-be-rendered based on at least one identification bit in the layer valid identification information.

The second determination module 62 is configured to: for each target layer to-be-rendered, determine a target rendering core corresponding to at least one target tile in the target layer to-be-rendered based on tile indication information for at least one rendering core, to enable that each target rendering core renders a corresponding target tile in parallel; herein, each piece of the tile indication information is used to indicate the number of tiles to-be-rendered that are receivable by the corresponding rendering core.

In some implementations, the first determination module 61 is further configured to: determine at least one valid layer to-be-rendered from at least one layer to-be-rendered based on at least one identification bit in the layer valid identification information, herein, each identification bit respectively indicates whether the corresponding layer to-be-rendered is valid; for each valid layer to-be-rendered, determine a resource table entry result of the valid layer to-be-rendered based on at least one resource table entry in a preset resource table; and when the resource table entry result of the valid layer to-be-rendered is a first result, take the valid layer to-be-rendered as the target layer to-be-rendered, herein, the first result indicates that the resource table entry allocation for the valid layer to-be-rendered is successful.

In some implementations, the first determination module 61 is further configured to: sequentially traverse at least one resource table entry in the resource table; determine a resource index identifier of the valid layer to-be-rendered based on an occupancy flag of the currently traversed resource table entry; and stop traversing when the resource index identifier is not a preset index identifier; determine a resource table entry result of the valid layer to-be-rendered based on the resource index identifier.

In some implementations, the first determination module 61 is further configured to at least one of the following: when the occupancy flag of the currently traversed resource table entry is a preset occupancy flag, take the index identifier of the resource table entry as the resource index identifier of the valid layer to-be-rendered; when the occupancy flag of the currently traversed resource table entry is not the preset occupancy flag, take the preset index identifier as the resource index identifier of the valid layer to-be-rendered.

In some implementations, the first determination module 61 is further configured to at least one of the following: when the resource index identifier is not a preset index identifier, take the first result as a resource table entry result of the valid layer to-be-rendered; and when the resource index identifier is the preset index identifier, take a second result as a resource table entry result of the valid layer to-be-rendered; herein, the second result indicates that the resource table entry allocation for the valid layer to-be-rendered is unsuccessful.

In some implementations, the first determination module 61 is further configured to: for each identification bit in the layer valid identification information, when the identification bit satisfies a first preset condition, take the layer to-be-rendered corresponding to the identification bit as a valid layer to-be-rendered.

In some implementations, the apparatus further includes an update module, configured to: for each target layer to-be-rendered, determine a first target resource table entry from at least one resource table entry in the resource table based on the resource index identifier of the target layer to-be-rendered; and update the first target resource table entry based on the layer identifier of the target layer to-be-rendered.

In some implementations, the apparatus further includes a reset module, configured to: for each target layer to-be-rendered, in response to detecting that the rendering state of the target layer to-be-rendered is a completed state, determine a second target resource table entry from at least one resource table entry in the resource table based on a resource index identifier of the target layer to-be-rendered, and reset the second target resource table entry.

In some implementations, the second determination module 62 is further configured to: partition the target layer to-be-rendered based on a preset partitioning strategy, to obtain the at least one target tile; for each target tile, determine order information of each rendering core based on tile indication information for each rendering core; and determine a target rendering core corresponding to the target tile based on the order information of each rendering core.

In some implementations, the second determination module 62 is further configured to: for each rendering core, when the tile indication information for the rendering core satisfies a second preset condition, determine order information of the rendering core based on the previous order information of the rendering core.

In some implementations, the second determination module 62 is further configured to: traverse each rendering core based on the order information of each rendering core, and take a first rendering core that does not satisfy the second preset condition as a target rendering core corresponding to the target tile.

In some implementations, the update module is further configured to: for each target tile, in response to allocating the target tile to the corresponding target rendering core, update tile indication information for the target rendering core corresponding to the target tile.

In some implementations, the reset module is further configured to: in response to the tile indication information for each rendering core satisfying the second preset condition, reset the tile indication information for each rendering core.

The above description of the apparatus embodiments is similar to that of the above description of the method embodiments, and has similar beneficial effects as the method embodiments. For technical details not disclosed in the apparatus embodiments of the present disclosure, reference may be made to the description of the device embodiments of the present disclosure for understanding.

It is to be noted that, in the embodiments of the disclosure, if the above methods is implemented in form of software functional units and sold or used as an independent product, they may also be stored in a computer-readable storage medium. Based on such understanding, the technical solution of the embodiments of the disclosure, in essence, or the parts making contributions to the related art may be embodied in a software product. The software product is stored in a storage medium, and includes several instructions to enable an electronic device (which may be a personal computer, a server, a network device or the like) to perform all or some of the methods according to various embodiments of the present disclosure. The foregoing storage medium includes various media capable of storing program codes, such as a USB flash drive, a mobile hard disk drive, a read-only memory (ROM), a magnetic disc, or an optical disk. As such, the embodiments of the present disclosure are not limited to any specific combination of hardware and software. .

Embodiments of the present disclosure provide an electronic device including a memory storing a computer program runnable on the processor and a processor, and the processor implements the above methods when executing the computer program.

Embodiments of the present disclosure provide a computer-readable storage medium having stored thereon a computer program that when executed by a processor, implements the above methods. The computer-readable storage medium may be transitory or non-transitory.

Embodiments of the present disclosure provide a computer program product including a non-transitory computer-readable storage medium storing a computer program that, when read and executed by a computer, implements some or all of the operations in the above methods. The computer program product may be specifically implemented through hardware, software, or a combination thereof. In an alternative embodiment, the computer program product is embodied as a computer storage medium; and in another alternative embodiment, the computer program product is embodied as a software product, such as a Software Development Kit (SDK) or the like.

It should be noted that FIG. 7 is a schematic diagram of a hardware entity of an electronic device according to an embodiment of the present disclosure. As illustrated in FIG. 7, the hardware entity of the electronic device 700 includes a processor 701, a communication interface 702, and a memory 703.

The processor 701 generally controls the overall operation of the electronic device 700.

The communication interface 702 may enable the electronic device to communicate with other terminals or servers through a network.

The memory 703 is configured to store instructions and applications executable by the processor 701, and may also cache data (e.g., image data, audio data, voice communication data, and video communication data) processed or to be processed by the processor 701 and various modules in the electronic device 700, which may be implemented by flash memory (FLASH) or Random Access Memory (RAM). Data transmission between the processor 701, the communication interface 702, and the memory 703 may be performed through the bus 704.

Here, it should be pointed out that the above description of the storage medium and device embodiments is similar to the description of the above method embodiments, and has beneficial effects similar to those of the method embodiments. For technical details not disclosed in embodiments of storage media and devices of the present disclosure, reference may be made to the description of method embodiments of the present disclosure.

It is to be understood that references throughout the specification to "an embodiment" or "one embodiment" mean that a particular feature, structure, or characteristic related to an embodiment is included in at least one embodiment of the present disclosure. Thus, appearances of "in one embodiment" or "in an embodiment" throughout the description do not necessarily refer to the same embodiment. Furthermore, these particular features, structures, or characteristics may be incorporated in any suitable manner in one or more embodiments. It is to be understood that, in the embodiments of the present disclosure, the serial numbers of the above processes do not imply the sequential order of execution, and the execution order of each process should be determined by its function and internal logic, rather than imposing any limitations on the implementation of the embodiments of the present disclosure. The above-described serial numbers of the embodiments of the present disclosure are for the purpose of description, and do not represent the advantages and disadvantages of the embodiments.

It should be noted that, herein, the terms "comprise," "include," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element limited by the expression "comprising a" does not preclude the presence of additional identical elements in a process, method, article, or apparatus that includes the element.

In some embodiments provided in the disclosure, it is to be understood that the disclosed device and method may be implemented in other ways. The device embodiments described above are merely illustrative. For example, the division of units is merely a logical functional division, and in actual implementation, there can be other division methods. For example, multiple units or components may be combined or integrated into another system, or some features may be neglected or not executed. In addition, coupling or direct coupling or communication connection between various displayed or discussed components may be indirect coupling or communication connection through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the present disclosure may be all integrated in one processing unit, or each unit may exist as a separate unit; or two or more units may be integrated in one unit. The integrated unit may be implemented in form of hardware, or may be implemented in form of hardware and software function units.

Those of ordinary skill in the art may understand that all or some steps of the above method embodiments may be completed by hardware related to program instructions. The program described above may be stored in a computer-readable storage medium; and the program, when executed, implements the steps of the method embodiments. The foregoing storage medium includes various media capable of storing program codes, such as a mobile hard disk drive, a read-only memory (ROM), a magnetic disk, or an optical disk.

Alternatively, if implemented in form of software functional units and sold or used as independent product, the above integrated unit of the present disclosure may also be stored in a computer-readable storage medium. Based on such understanding, the technical solution of the present disclosure, in essence, or the parts making contributions to the related art may be embodied in a software product. The computer software product is stored in a storage medium, and includes several instructions to enable an electronic device (which may be a personal computer, a server, a network device or the like) to perform all or some of the methods according to various embodiments of the present disclosure. The foregoing storage medium includes various media capable of storing program codes, such as a mobile storage device, a read-only memory (ROM), a magnetic disk, or an optical disk.

Stated above is merely implementations of the present disclosure, but the scope of protection of the present disclosure is not limited thereto. Any modification or replacement that are easily conceivable by those familiar with the related art within the technical range disclosed by the present disclosure shall fall within the scope of protection of the present disclosure.

Industrial Applicability

Embodiments of the present disclosure provide a tile distribution control method, chip and apparatus, a controller, an electronic device, a storage medium, and a computer program product. The tile distribution control method includes that: at least one target layer to-be-rendered is determined from at least one layer to-be-rendered based on at least one identification bit in the layer valid identification information; for each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered which are receivable by the corresponding rendering core. In this way, by using the layer valid identification information to determine multiple valid target layers to-be-rendered, the merging of multiple layers to-be-rendered is achieved.

**Claims**

1.  A method for controlling tile distribution, wherein:

    determining at least one target layer to-be-rendered from at least one layer to-be-rendered based on at least one identification bit in layer valid identification information; and
    for each target layer to-be-rendered, determining a target rendering core corresponding to at least one target tile in the target layer to-be-rendered based on tile indication information for at least one rendering core, to enable that each target rendering core renders a corresponding target tile in parallel; wherein each piece of the tile indication information is used to indicate a number of tiles to-be-rendered that are receivable by a corresponding rendering core.

2. The method for controlling tile distribution of claim 1, wherein determining the at least one target layer to-be-rendered from the at least one layer to-be-rendered based on the at least one identification bit in the layer valid identification information comprises:

determining at least one valid layer to-be-rendered from the at least one layer to-be-rendered based on the at least one identification bit in the layer valid identification information; wherein each identification bit represents whether a corresponding layer to-be-rendered is valid; and
for each valid layer to-be-rendered, determining a resource table entry result of the valid layer to-be-rendered based on at least one resource table entry in a preset resource table; and when the resource table entry result of the valid layer to-be-rendered is a first result, taking the valid layer to-be-rendered as the target layer to-be-rendered; wherein the first result indicates that a resource table entry allocation for the valid layer to-be-rendered is successful.

3. The method for controlling tile distribution of claim 2, wherein determining the resource table entry result of the valid layer to-be-rendered based on the at least one resource table entry in the preset resource table comprises:

sequentially traversing the at least one resource table entry in the resource table, determining a resource index identifier of the valid layer to-be-rendered based on an occupancy flag of a currently traversed resource table entry, and stopping traversing when the resource index identifier is not a preset index identifier; and
determining a resource table entry result of the valid layer to-be-rendered based on the resource index identifier.

4. The method for controlling tile distribution of claim 3, wherein determining the resource index identifier of the valid layer to-be-rendered based on the occupancy flag of the currently traversed resource table entry comprises at least one of:

when the occupancy flag of the currently traversed resource table entry is a preset occupancy flag, taking an index identifier of the currently traversed resource table entry as the resource index identifier of the valid layer to-be-rendered; or
when the occupancy flag of the currently traversed resource table entry is not the preset occupancy flag, taking the preset index identifier as the resource index identifier of the valid layer to-be-rendered.

5. The method for controlling tile distribution of claim 3, wherein determining the resource table entry result of the valid layer to-be-rendered based on the resource index identifier comprises at least one of:

when the resource index identifier is not the preset index identifier, taking the first result as the resource table entry result of the valid layer to-be-rendered; or
when the resource index identifier is the preset index identifier, taking a second result as the resource table entry result of the valid layer to-be-rendered; wherein the second result indicates that a resource table entry allocation for the valid layer to-be-rendered is unsuccessful.

6. The method for controlling tile distribution of claim 2, wherein determining the at least one valid layer to-be-rendered from the at least one layer to-be-rendered based on the at least one identification bit in the layer valid identification information comprises:
for each identification bit in the layer valid identification information, when the identification bit satisfies a first preset condition, taking a layer to-be-rendered corresponding to the identification bit as the valid layer to-be-rendered.

7. The method for controlling tile distribution of claim 2, further comprising:
for each target layer to-be-rendered, determining a first target resource table entry from the at least one resource table entry in the resource table based on a resource index identifier of the target layer to-be-rendered, and updating the first target resource table entry based on a layer identifier of the target layer to-be-rendered.

8. The method for controlling tile distribution of claim 2, further comprising:
for each target layer to-be-rendered, in response to detecting that a rendering state of the target layer to-be-rendered is a completed state, determining a second target resource table entry from the at least one resource table entry in the resource table based on a resource index identifier of the target layer to-be-rendered, and resetting the second target resource table entry.

9. The method for controlling tile distribution of any one of claims 1 to 8, wherein determining the target rendering core corresponding to the at least one target tile in the target layer to-be-rendered based on the tile indication information for the at least one rendering core comprises:

   partitioning the target layer to-be-rendered based on a preset partitioning strategy, to obtain the at least one target tile; and
   for each target tile, determining order information of each rendering core based on the tile indication information for each rendering core, and determining a target rendering core corresponding to the target tile based on the order information of each rendering core.

10. The method for controlling tile distribution of claim 9, wherein

    determining the order information of the each rendering core based on the tile indication information for each rendering core comprises: for each rendering core, when the tile indication information of the rendering core satisfies a second preset condition, determining the order information of the rendering core based on previous order information for the rendering core; and
    wherein determining the target rendering core corresponding to the target tile based on the order information of each rendering core comprises: traversing each rendering core based on the order information of each rendering core, and taking a first rendering core that does not satisfy the second preset condition as the target rendering core corresponding to the target tile.

11. The method for controlling tile distribution of claim 10, further comprising at least one of:

    for each target tile, in response to allocating the target tile to a corresponding target rendering core, updating tile indication information for the target rendering core corresponding to the target tile; or
    in response to the tile indication information for each rendering core satisfying the second preset condition, resetting the tile indication information for each rendering core.

12. A controller for tile distribution, comprising a processing part and a generating part, wherein:

    the processing part is configured to: determine at least one target layer to-be-rendered from at least one layer to-be-rendered based on at least one identification bit in layer valid identification information; and
    the generating part is configured to: for each target layer to-be-rendered, determine a target rendering core corresponding to at least one target tile in the target layer to-be-rendered based on tile indication information for at least one rendering core, to enable that each target rendering core renders a corresponding target tile in parallel; wherein each piece of the tile indication information is used to indicate a number of tiles to-be-rendered that are receivable by a corresponding rendering core.

13. The controller of claim 12, wherein the controller further comprises a buffer part, wherein:

    the buffer part is configured to store the layer valid identification information;
    the processing part is further configured to obtain the layer valid identification information from the buffer part.

14. The controller of claim 12, wherein the controller further comprises a preset resource table comprising at least one resource table entry;
    the processing part is further configured to: for each target layer to-be-rendered, determine a first target resource table entry from the at least one resource table entry in the resource table based on a resource index identifier of the target layer to-be-rendered, and update the first target resource table entry based on a layer identifier of the target layer to-be-rendered.

15. The controller of claim 12, wherein the controller further comprises a layer rendering state table comprising a rendering state of each target layer to-be-rendered; and the processing part is further configured to perform at least one of:

    in response to receiving a layer end signal, determine a first target layer to-be-rendered from at least one target layer to-be-rendered in the layer rendering state table, and update a rendering state of the first target layer to-be-rendered to a completed state; determine a second target resource table entry from the at least one resource table entry in the resource table based on a resource index identifier of the first target layer to-be-rendered, and reset the second target resource table entry; or

in response to receiving the end signal, determine at least one second target layer to-be-rendered from the at least one target layer to-be-rendered in the layer rendering state table, and update a rendering state of each second target layer to-be-rendered to a completed state; for each second target layer to-be-rendered, determine a third target resource table entry from the at least one resource table entry in the resource table based on a resource index identifier of the second target layer to-be-rendered, and reset the third target resource table entry.

16. The controller of any one of claims 12 to 15, wherein the controller further comprises a port part, and wherein: the processing part is further configured to: in response to receiving a rendering command, obtain the layer valid identification information from a memory by using the port part, and store the layer valid identification information in the buffer part of the controller.

17. A chip for controlling tile distribution, applied to a graphics processor, wherein the graphics processor performs a tile distribution process through a Tile-based Rendering (TBR) architecture, and wherein:

a frontend module of the TBR architecture, configured to: determine layer valid identification information based on an image to-be-rendered; wherein the image to-be-rendered comprises at least one layer to-be-rendered, and the layer valid identification information comprises at least one identification bit;
a controller, configured to: acquire the layer valid identification information determined by the frontend module; determine at least one target layer to-be-rendered from the at least one layer to-be-rendered based on the at least one identification bit in the layer valid identification information; for each target layer to-be-rendered, determine a target rendering core corresponding to at least one target tile in the target layer to-be-rendered based on tile indication information for at least one rendering core; wherein each piece of the tile indication information is used to indicate a number of tiles to-be-rendered that are receivable by a corresponding rendering core; and
a backend module of the TBR architecture, configured to: use each target rendering core to render a corresponding target tile in parallel, to complete rendering of the image to-be-rendered.

18. An apparatus for controlling tile distribution, comprising:

a first determination module, configured to: determine at least one target layer to-be-rendered from at least one layer to-be-rendered based on at least one identification bit in layer valid identification information;
a second determination module, configured to: for each target layer to-be-rendered, determine a target rendering core corresponding to at least one target tile in the target layer to-be-rendered based on tile indication information for at least one rendering core, to enable that each target rendering core renders a corresponding target tile in parallel; wherein each piece of the tile indication information is used to indicate a number of tiles to-be-rendered that are receivable by a corresponding rendering core.

19. An electronic device, comprising a processor and a memory, wherein the memory stores a computer program executable on the processor; and when executing the computer program, the processor implements the method of any one of claims 1 to 11.

20. A computer-readable storage medium having stored thereon a computer program that when executed by a processor, implements the method of any one of claims 1 to 11.

21. A computer program product, comprising a non-transitory computer-readable storage medium; wherein the non-transitory computer-readable storage medium stores a computer program that, when read and executed by a computer, implements the method of any one of claims 1 to 11.

render target

**FIG. 1A**

vertex processing module

graphics processing module

tiling module

150

graphics data

110

system memory

tile information

vertex information

130

rasterization module

120

hidden surface removal module

pixel shading module

output merging module

depth buffer

texture buffer

color buffer

on-chip memory

140

**FIG. 1B**

**FIG. 1C**

At least one target layer to-be-rendered is determined from at least one layer to-be-rendered based on at least one identification bit in layer valid identification information —— S11

For each target layer to-be-rendered, a target rendering core corresponding to at least one target tile in the target layer to-be-rendered is determined based on tile indication information for at least one rendering core, to enable that each target rendering core renders the corresponding target tile in parallel; herein, each piece of tile indication information is used to indicate the number of tiles to-be-rendered that are receivable by the corresponding rendering core —— S12

**FIG. 1D**

**FIG. 1E**

|  |  |  |  |  |  |
|---|---|---|---|---|---|
| tile 0 | tile 2 | tile 4 | tile 0 | tile 2 | tile 4 |
| tile 1 | tile 3 | tile 5 | tile 1 | tile 3 | tile 5 |

|  |  |  |
|---|---|---|
| tile 0 | tile 2 | tile 4 |
| tile 1 | tile 3 | tile 5 |

layer0                layer1                layer2

**FIG. 1F**

layer0 layer1 layer2 layer3 layer4 layer5

...

Core0 Core1 Core2 Core3 Core4 Core5 Core6 Core7

**FIG. 1G**

Base address        Base address + layer size*1        Base address + layer size*2

501                                502                                503

...

layer0                layer1                layer2

**FIG. 1H**

At least one valid layer to-be-rendered is determined from at least one layer to-be-rendered based on at least one identification bit in the layer valid identification information; herein, each identification bit represents whether the corresponding layer to-be-rendered is valid — S21

For each valid layer to-be-rendered, a resource table entry result for the valid layer to-be-rendered is determined based on at least one resource table entry in the preset resource table; and when the resource table entry result for the valid layer to-be-rendered is the first result, the valid layer to-be-rendered is taken as the target layer to-be-rendered — S22

For each target layer to-be-rendered, a target rendering core corresponding to at least one target tile in the target layer to-be-rendered is determined based on tile indication information for at least one rendering core, to enable that each target rendering core renders the corresponding target tile in parallel; herein each piece of the tile indication information is used to indicate the number of tiles to-be-rendered that are receivable by the corresponding rendering core — S23

## FIG. 2A

Resource table (32 resource entries in total)

| occupancy flag=0 | occupancy flag=0 | occupancy flag=0 | occupancy flag=0 | ... | occupancy flag=0 |
|---|---|---|---|---|---|
| occupancy flag=1 | occupancy flag=1 | occupancy flag=1 | occupancy flag=1 | ... | occupancy flag=1 |

## FIG. 2B

| At least one target layer to-be-rendered is determined from at least one layer to-be-rendered based on at least one identification bit in the layer valid identification information | S31 |

| For each target layer to-be-rendered, the target layer to-be-rendered is partitioned based on a preset partitioning strategy, to obtain at least one target tile | S32 |

| For each target tile, order information of each rendering core is determined based on tile indication information for at least one rendering core, and a target rendering core corresponding to the target tile is determined based on the order information of each rendering core, to enable that the target tile is rendered in parallel by using the target rendering core; herein each piece of the tile indication information is used to indicate the number of tiles to-be-rendered that are receivable by the corresponding rendering core | S33 |

**FIG. 3**

| Tile distribution controller 40 |
| Processing part 41 |
| Generating part 42 |

**FIG. 4A**

EP 4 760 639 A1

FIG. 4B

32

FIG. 4C

FIG. 5A

T2 —533

T1 —532

T0 —531

Backend module —53

T2

T1

T0

—541

—542

—543

—544

Render target

**FIG. 5B**

Hardware —523

layer9  ...  layer2  layer1  layer0

Completion signal —524

Controller —52

Frontend module —51

Backend module —53

Memory —522

**FIG. 5C**

Tile distribution control device 60

First determination module 61

Second determination module 62

**FIG. 6**

700

Electronic device

Communication interface  702

703  Memory

Bus 704

Processor  701

**FIG. 7**

## INTERNATIONAL SEARCH REPORT

| | International application No. |
| --- | --- |
| | **PCT/CN2024/110128** |

| | | |
| --- | --- | --- |
| **A.** | **CLASSIFICATION OF SUBJECT MATTER** | |
| | G06T 15/00(2011.01)i | |

According to International Patent Classification (IPC) or to both national classification and IPC

| | | |
| --- | --- | --- |
| **B.** | **FIELDS SEARCHED** | |

Minimum documentation searched (classification system followed by classification symbols)

    IPC:G06T

Documentation searched other than minimum documentation to the extent that such documents are included in the fields searched

Electronic data base consulted during the international search (name of data base and, where practicable, search terms used)

    VEN: CNABS; CNTXT; WOTXT; EPTXT; USTXT; CNKI; IEEE: 图块, 分发, 层, 有效, 标识, 位, 渲染, 目标, 核心, 并行, 指示, 数量, picture, block, target, image, layer, core, render, parallel, indication, number, bit

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| PX | CN 116740248 A (MOORE THREADS INTELLIGENT TECHNOLOGY (BEIJING) CO., LTD.) 12 September 2023 (2023-09-12)<br>    claims 1-20, and description, paragraphs [0020]-[0190] | 1-21 |
| A | CN 110288689 A (BEIJING SANKUAI ONLINE TECHNOLOGY CO., LTD.) 27 September 2019 (2019-09-27)<br>    description, paragraphs [0068]-[0141] | 1-21 |
| A | CN 116188244 A (MOORE THREADS INTELLIGENT TECHNOLOGY (BEIJING) CO., LTD.) 30 May 2023 (2023-05-30)<br>    entire document | 1-21 |
| A | CN 113946399 A (SHANGHAI SHUHUI SYSTEM TECHNOLOGY CO., LTD.) 18 January 2022 (2022-01-18)<br>    entire document | 1-21 |
| A | US 2018137677 A1 (SAMSUNG ELECTRONICS CO., LTD.) 17 May 2018 (2018-05-17)<br>    entire document | 1-21 |

☐ Further documents are listed in the continuation of Box C.     ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **22 October 2024** | **30 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110128**

| Patent document cited in search report | | | Publication date (day/month/year) | Patent family member(s) | | | Publication date (day/month/year) |
|---|---|---|---|---|---|---|---|
| CN | 116740248 | A | 12 September 2023 | None | | | |
| CN | 110288689 | A | 27 September 2019 | None | | | |
| CN | 116188244 | A | 30 May 2023 | None | | | |
| CN | 113946399 | A | 18 January 2022 | None | | | |
| US | 2018137677 | A1 | 17 May 2018 | KR | 20180055446 | A | 25 May 2018 |
| | | | | KR | 102646906 | B1 | 12 March 2024 |
| | | | | US | 10553024 | B2 | 04 February 2020 |

Form PCT/ISA/210 (patent family annex) (July 2022)

**EP 4 760 639 A1**

**Patent documents cited in the description**

- CN 202310993195